(19) Europäisches Patentamt
European Patent Office
Office européen des brevets

(11) **EP 4 386 892 A1**

(12) **EUROPEAN PATENT APPLICATION**

(43) Date of publication:
**19.06.2024 Bulletin 2024/25**

(21) Application number: **23212551.8**

(22) Date of filing: **28.11.2023**

(51) International Patent Classification (IPC):
*H01M 4/133* (2010.01)   *H01M 4/134* (2010.01)
*H01M 4/36* (2006.01)   *H01M 4/587* (2010.01)
*H01M 4/62* (2006.01)   *H01M 10/0562* (2010.01)
*H01M 10/0565* (2010.01)   *H01M 4/02* (2006.01)

(52) Cooperative Patent Classification (CPC):
**H01M 10/0562; H01M 4/133; H01M 4/134;**
**H01M 4/364; H01M 4/587; H01M 4/62;**
**H01M 4/622; H01M 4/623; H01M 10/0565;**
H01M 2004/027; H01M 2004/028; H01M 2300/0068

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **14.12.2022 KR 20220174955**
**27.11.2023 KR 20230166676**

(71) Applicant: **Samsung SDI Co., Ltd.**
**Yongin-si, Gyeonggi-do 17084 (KR)**

(72) Inventors:
• **KU, Junhwan**
**16678 Suwon-si (KR)**
• **LEE, Seoksoo**
**16678 Suwon-si (KR)**
• **LEE, Moonjoo**
**16678 Suwon-si (KR)**
• **LEE, Yonggun**
**16678 Suwon-si (KR)**
• **CHOI, Wonsung**
**16678 Suwon-si (KR)**

(74) Representative: **Elkington and Fife LLP**
**Prospect House**
**8 Pembroke Road**
**Sevenoaks, Kent TN13 1XR (GB)**

(54) **ALL-SOLID SECONDARY BATTERY AND METHOD OF PREPARING THE SAME**

(57)   A positive electrode for an all-solid secondary battery, including a first positive active material, a second positive active material, a first solid electrolyte, and a second solid electrolyte, wherein the first positive active material has a D50 particle diameter that is greater than a D50 particle diameter of the second positive active material, the first solid electrolyte has a first D50 particle diameter of about 0.5 to about 1.9 micrometers ($\mu$m), and a particle size distribution that satisfies Equation 1 as described herein, the second solid electrolyte has second D50 particle diameter of about 2 to about 5 $\mu$m, a ratio of the first D50 particle diameter to the second D50 particle diameter satisfies Equation 2 as described herein, and an amount of the first solid electrolyte in the positive electrode is greater than an amount of the second solid electrolyte in the positive electrode, by weight.

FIG. 1

●101 ○102 ◉103 ◎104

EP 4 386 892 A1

**Description**

FIELD OF THE INVENTION

The present subject matter relates to an all-solid secondary battery and a method of preparing the same.

BACKGROUND OF THE INVENTION

Recently, batteries with a high energy density and good safety have been actively developed due to industrial demands. For example, lithium-ion batteries are being commercialized not only in the fields of information-related devices and communication devices, but also in the field of automobiles. In the field of automobiles, safety is especially important because it is related to health and safety.
Since the currently commercially-available lithium-ion batteries use an electrolytic solution including a flammable organic solvent, there remains a possibility of overheating and a resulting fire when a short circuit occurs. Accordingly, an all-solid-state secondary battery using a solid electrolyte instead of an electrolytic solution has been proposed.
An all-solid-state secondary battery does not use a combustible organic solvent, and thus, the likelihood of a fire or an explosion may be significantly reduced, even if a short circuit occurs. Therefore, such an all-solid-state secondary battery may greatly increase the safety as compared to a lithium-ion battery using a conventional electrolytic solution.
An all-solid-state secondary battery may be prepared by using a sulfide-containing solid electrolyte having excellent ionic conductivity as a solid electrolyte of the all-solid-state secondary battery and interposing the electrolyte between a positive electrode and a negative electrode. Here, the positive electrode contains a positive active material, a solid electrolyte, and a conductive material, and a method of increasing a content of the positive active material and using a solid electrolyte having a small particle size has been proposed. However, according to this method, high-rate characteristics and capacity do not reach a satisfactory level, and improvement thereof is required.
Accordingly, there remains a continuing need for all-solid secondary batteries.

SUMMARY OF THE INVENTION

Provided is a positive electrode for an all-solid secondary battery, with improved density and reduced grain boundary resistance.
Provided is an all-solid secondary battery with improved cell performance by including the above-described positive electrode.
Provided is a method of preparing the above-described all-solid secondary battery.
Additional aspects will be set forth in part in the detailed description that follows and, in part, will be apparent from the detailed description, or may be learned by practice of the presented exemplary embodiments described herein.
According to an aspect, a positive electrode for an all-solid secondary battery includes a first positive active material, a second positive active material, a first solid electrolyte, and a second solid electrolyte, wherein the first positive active material has a D50 particle diameter that is greater than a D50 particle diameter of the second positive active material, wherein the first solid electrolyte has a first D50 particle diameter of about 0.5 micrometers ($\mu$m) to about 1.5 $\mu$m, wherein the first solid electrolyte has a particle size distribution that satisfies Equation 1, wherein the second solid electrolyte has a second D50 particle diameter of about 2 $\mu$m to about 5 $\mu$m, wherein a ratio of the first D50 particle diameter to the second D50 particle diameter satisfies Equation 2, and wherein an amount of the first solid electrolyte in the positive electrode is greater than an amount of the second solid electrolyte in the positive electrode, by weight:

$$\text{Equation 1}$$

$$(d_1 90 - d_1 10) / d_1 50 < 2$$

$$\text{Equation 2}$$

$$0.1 \le (d_1 50 / d_2 50) \le 0.95$$

wherein, in Equations 1 and 2,

d$_1$10 is a D10 particle diameter of the first solid electrolyte,
d$_1$50 is the first D50 particle diameter of the first solid electrolyte,

$d_2 50$ is the second D50 particle diameter of the second solid electrolyte, and
$d_1 90$ is a D90 particle diameter of the first solid electrolyte.

In Equation 1, $(d_1 90 - d_1 10) / d_1 50$ is less than or equal to 1.9, less than or equal to 1.8, less than or equal to 1.7, for example, in the range of 1 to 1.9, 1.5 to 1.8, or 1.65 to 1.75.

The second D50 particle diameter is about 2 $\mu$m to about 4 $\mu$m, about 2 $\mu$m to about 3.5 $\mu$m, or 2 $\mu$m to about 3 $\mu$m.

The second solid electrolyte has a particle size distribution that satisfies Equation 3:

### Equation 3

$$(d_2 90 - d_2 10) / d_2 50 < 3.5$$

wherein, in Equation 3,

$d_2 10$ is a D10 particle diameter of the second solid electrolyte, and
$d_2 90$ is a D90 particle diameter of the second solid electrolyte.

A ratio of the amount of the second solid electrolyte in the positive electrode to the amount of the first solid electrolyte in the positive electrode may satisfy Equation 4:

### Equation 4

$$0.1 \leq (y/x) < 1$$

wherein, in Equation 4,

x is the amount of the first solid electrolyte in the positive electrode, by weight,
y is the amount of the second solid electrolyte in the positive electrode, by weight, and
x and y are both numbers greater than 0.

A ratio of the amount of the second solid electrolyte in the positive electrode to the amount of the first solid electrolyte in the positive electrode may satisfy Equation 5:

### Equation 5

$$0.25 \leq (y/x) \leq 0.66$$

wherein, in Equation 5,

x is the amount of the first solid electrolyte in the positive electrode, by weight,
y is the amount of the second solid electrolyte in the positive electrode, by weight, and
x and y are both numbers greater than 0.

The first solid electrolyte and the second solid electrolyte may each independently comprise a plurality of monolith particles (or one body particles).

A ratio of a D50 particle diameter of the second positive active material (i.e., the small-diameter positive active material) to a D50 particle diameter of the first solid electrolyte may satisfy Equation 6, and a ratio of a D50 particle diameter of the first positive active material (i.e., the large-diameter positive active material) to a D50 particle diameter of the second solid electrolyte may satisfy Equation 7:

### Equation 6

$$3 \leq \lambda 1 \leq 30$$

## Equation 7

$$3 \leq \lambda 2 \leq 30$$

wherein, in Equations 6 and 7,

$\lambda 1$ is the ratio of the D50 particle diameter of the second positive active material to the D50 particle diameter of the first solid electrolyte, and

$\lambda 2$ is the ratio of a D50 particle diameter of the first positive active material to the D50 particle diameter of the second solid electrolyte.

A total amount of the first solid electrolyte and the second solid electrolyte combined may be about 2 parts by weight to about 70 parts by weight, with respect to 100 parts by weight of a total weight of the first positive active material (i.e., the large-diameter positive active material) and the second positive active material (i.e., the small-diameter positive active material) combined.

A D50 particle size of the first positive active material (i.e., the large-diameter positive active material) may be about 14 $\mu$m or greater, or about 14 $\mu$m to about 20 $\mu$m, and a D50 particle size of the second positive active material (i.e., the small-diameter positive active material) may be about 6 $\mu$m or less, for example, about 3 $\mu$m to about 5.5 $\mu$m.

An ionic conductivity of the first solid electrolyte and the second solid electrolyte may each independently about 1 millisiemens per centimeter (mS/cm) to about 7 mS/cm at 25°C.

According to another aspect, an all-solid secondary battery includes the above-described positive electrode; a negative electrode; and a solid electrolyte arranged between the positive electrode and the negative electrode.

The negative electrode may include a negative current collector, and/or a first negative active material layer arranged on the negative current collector, wherein the first negative active material layer may include a carbon-containing negative active material; or a carbon-containing negative active material, and a first negative active material including at least one of a metal or a metalloid.

The carbon-containing negative active material may include amorphous carbon, and the first negative active material may include indium, silicon, gallium, tin, aluminum, titanium, zirconium, niobium, germanium, antimony, bismuth, gold, platinum, palladium, magnesium, silver, zinc, nickel, iron, cobalt, chromium, cesium, sodium, potassium, calcium, yttrium, tantalum, hafnium, barium, vanadium, strontium, lanthanum, or a combination thereof.

The first negative active material may include i) a composite of first particles comprising amorphous carbon, and second particles comprising a metal or a metalloid, or ii) a mixture of first particles comprising amorphous carbon and second particles comprising a metal or a metalloid, and an amount of the second particles may be about 1 weight percent (wt%) to about 60 wt%, with respect to a total weight of the composite or mixture.

The solid electrolyte may includes an oxide-containing solid electrolyte, a sulfide-containing solid electrolyte, or a combination thereof.

The negative current collector, the first negative active material layer, or a region therebetween may be a Li metal-free region that does not contain lithium (Li) metal, in an initial state or a post-discharge state of the all-solid secondary battery.

According to another aspect, a method of preparing an all-solid secondary battery includes providing a positive electrode including a first positive active material, a second positive active material, a first solid electrolyte, and a second solid electrolyte; providing a negative electrode; preparing a solid electrolyte; and arranging the positive electrode, the solid electrolyte, and the negative electrode to prepare the all-solid secondary battery.

The providing of the positive electrode may include obtaining a first mixture by mixing together a first positive active material, a second positive active material, and a first solid electrolyte; obtaining a second mixture by mixing together the first positive active material, the second positive active material, and the second solid electrolyte; mixing the second mixture with the first mixture, and adding and mixing a conductive agent, a binder, and a solvent thereto.

BRIEF DESCRIPTION OF THE DRAWINGS

The above and other aspects, features, and advantages of certain exemplary embodiments will be more apparent from the following detailed description taken in conjunction with the accompanying drawings, in which:

FIG. 1 is a diagram showing a structure of a positive electrode for an all-solid secondary battery according to one or more embodiments;

FIG. 2 is a graph of voltage (Volts, V versus Li/Li$^+$) versus specific capacity (milliampere hours per gram, mAh g$^{-1}$) showing changes in voltages according to specific capacity in all-solid secondary batteries prepared according to Examples 1 and 2 and Comparative Examples 1 and 2;

FIG. 3 is a diagram showing changes in direct current internal resistance (DCIR, ohms square centimeter ($\Omega \cdot cm^2$)) of all-solid secondary batteries prepared according to Examples 1, 2, and 5, and Comparative Examples 1, 2, 4, and 5;

FIG. 4 is a cross-sectional view showing a structure of an all-solid secondary battery according to one or more embodiments; and

FIG. 5 is a cross-sectional view showing a structure of an all-solid secondary battery according to another embodiment.

## DETAILED DESCRIPTION OF THE EMBODIMENTS

Reference will now be made in further detail to exemplary embodiments, examples of which are illustrated in the accompanying drawings, wherein like reference numerals refer to like elements throughout. In this regard, the present exemplary embodiments may have different forms and should not be construed as being limited to the detailed descriptions set forth herein. Accordingly, the exemplary embodiments are merely described in further detail below, and by referring to the figures, to explain certain aspects. As used herein, the term "and/or" includes any and all combinations of one or more of the associated listed items. Expressions such as "at least one of," when preceding a list of elements, modify the entire list of elements and do not modify the individual elements of the list.

The terminology used herein is for the purpose of describing one or more exemplary embodiments only and is not intended to be limiting. As used herein, the singular forms "a," "an," and "the" are intended to include the plural forms as well, unless the context clearly indicates otherwise. The term "or" means "and/or." It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

It will be understood that, although the terms first, second, third etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of the present embodiments.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

It will be understood that when an element is referred to as being "on" another element, it can be directly in contact with the other element or intervening elements may be present therebetween. In contrast, when an element is referred to as being "directly on" another element, there are no intervening elements present.

Unless otherwise defined, all terms (including technical and scientific terms) used herein have the same meaning as commonly understood by one of ordinary skill in the art to which this general inventive concept belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within $\pm$ 30%, 20%, 10%, 5% of the stated value.

Hereinafter, a positive electrode for an all-solid secondary battery according to one or more embodiments, an all-solid secondary battery including the same, and a method preparing the all-solid secondary battery will be described in further detail.

In order to realize an all-solid secondary battery using a sulfide-containing electrolyte, a positive electrode is formed by including an active material, a sulfide-containing solid electrolyte, and a conductive agent, and a solid electrolyte is arranged between a negative electrode and the positive electrode to allow transfer of lithium ions. In order to increase energy density of an all-solid secondary battery, it is necessary to increase a ratio of an active material in the positive electrode, and at the same time, in order to increase a contact area with the positive electrode, it is required to use a sulfide-containing solid electrolyte having a small particle size.

In order to further increase energy density of an all-solid secondary battery, a positive electrode containing a bimodal positive active material may be used, and cell performance may be secured by assembling and pressurizing an electrode and a solid electrolyte so that the interfaces are in close contact.

However, when a solid electrolyte having a small particle size is used alone in preparing the positive electrode, it is difficult to express a high-rate and maximum capacity due to relatively low ionic conductivity and pores generated in the bimodal positive electrode. In addition, when a solid electrolyte having a small particle size is used alone, since the solid electrolyte has low stability against moisture in the air, ionic conductivity may decrease when battery assembly processes are proceeded for a long time, resulting in deterioration of cell performance.

When a bimodal positive active material is used, grain boundary resistance increases due to internal pores present in the positive electrode, and high-rate and charge/discharge characteristics are deteriorated. In addition, when a positive electrode is prepared by using a solid electrolyte having a non-uniform particle size distribution, a contact area between the positive active material and the solid electrolyte may be reduced and many pores may be generated, resulting in high voltage.

Therefore, the applicant has solved the above problems to provide an all-solid-state battery structure that realizes high-rate characteristics and high capacity, while exhibiting high energy density, and provide herein a positive electrode for an all-solid secondary battery using a large-diameter solid electrolyte, and a small-diameter solid electrolyte, together with a bimodal positive active material. This will be described in further detail herein.

A positive electrode for an all-solid secondary battery according to an aspect includes a first positive active material (i.e., a large-diameter positive active material), a second positive active material (i.e., a small-diameter positive active material), a first solid electrolyte, and a second solid electrolyte, wherein the first positive active material has a D50 particle diameter that is greater than a D50 particle diameter of the second active material; the first solid electrolyte, which includes a small-diameter solid electrolyte, has a first D50 particle diameter of about 0.5 micrometers ($\mu$m) to about 1.5 $\mu$m, and the first solid electrolyte has a particle size distribution that satisfies Equation 1 below; the second solid electrolyte, which includes a large-diameter solid electrolyte, has a second D50 particle diameter of about 2 $\mu$m to about 5 $\mu$m; wherein a ratio of the first D50 particle diameter to the second D50 particle diameter satisfies Equation 2 below; and wherein an amount of the first solid electrolyte in the positive electrode is greater than an amount of the second solid electrolyte in the positive electrode, by weight.

$$\text{Equation 1}$$

$$(d_190 - d_110) / d_150 < 2$$

$$\text{Equation 2}$$

$$0.1 \le (d_150 / d_250) \le 0.95$$

wherein, in Equations 1 and 2,

$d_110$ is a D10 particle diameter of the first solid electrolyte,
$d_150$ is the first D50 particle diameter of the first solid electrolyte,
$d_250$ is the second D50 particle diameter of the second solid electrolyte, and
$d_190$ is a D90 particle diameter of the first solid electrolyte.

A ratio of the amount of the second solid electrolyte in the positive electrode to the amount of the first solid electrolyte in the positive electrode may satisfy Equation 4 below:

$$\text{Equation 4}$$

$$0.1 < y/x < 1$$

wherein, in Equation 4,

x is the amount of the first solid electrolyte in the positive electrode, , by weight,

y is the amount of the second solid electrolyte in the positive electrode, , by weight, and
x and y are numbers greater than or equal to 0.

The second solid electrolyte may include second solid electrolyte (i.e., a large-diameter solid electrolyte) that has a particle size distribution that satisfies Equation 3 below:

## Equation 3

$$(d_290 - d_210) / d_250 < 3.5$$

wherein, in Equation 3,

$d_210$ is a D10 particle diameter of the second solid electrolyte, and
$d_290$ is a D90 particle diameter of the second solid electrolyte.

When a multimodal solid electrolyte is used as a solid electrolyte, internal resistance of the positive electrode may increase due to non-uniform particle size distribution.

However, in the positive electrode according to one or more embodiments, the first solid electrolyte (i.e., the small-diameter solid electrolyte) has a particle size distribution of Equation 1 above, and the second solid electrolyte (i.e., the large-diameter solid electrolyte) has a particle size distribution of Equation 3 above. As such, when the first solid electrolyte (i.e., the small-diameter solid electrolyte) and the second solid electrolyte (i.e., the large-diameter solid electrolyte) have uniform particle sizes, a contact area between the bimodal positive active material and the solid electrolyte increases and the pores in the positive electrode decrease, so that occurrence of overvoltage due to the pores may be prevented in advance.

The first solid electrolyte (i.e., the small-diameter solid electrolyte) has a first D50 particle diameter of about 0.5 $\mu$m to about 1.5 $\mu$m, and the second solid electrolyte (i.e., the large-diameter solid electrolyte) may have a second D50 particle diameter of about 2 $\mu$m to about 5 $\mu$m. When the D50 particle diameters of the first solid electrolyte (i.e., the small-diameter solid electrolyte) and the second solid electrolyte (i.e., the large-diameter solid electrolyte) are within the above ranges, the one or more pores of the bimodal positive active material may be reduced, and, thus, the positive electrode density may be improved.

The second solid electrolyte (i.e., the large-diameter solid electrolyte) includes a solid electrolyte having a composition with improved atmospheric stability and ionic conductivity. Therefore, when a positive electrode containing such second solid electrolyte (i.e., a large-diameter solid electrolyte) is used, reactions with moisture in the air may be suppressed during assembly of the battery, thereby minimizing a decrease in cell performance during assembly processes using the electrode and the solid electrolyte. In addition, the electrode density is also increased to further increase the energy density.

The ratio ($d_150/d_250$) of the first D50 particle diameter ($d_150$) of the first solid electrolyte to the second D50 particle diameter ($d_250$) of the second solid electrolyte may be about 0.2 to about 0.9, about 0.2 to about 0.8, about 0.2 to about 0.7, or about 0.2 to about 0.55.

The ratio of the amount of the second solid electrolyte to the amount of the first solid electrolyte may satisfy Equation 4 below, and/or for example, may satisfy Equation 5 below:

## Equation 4

$$0.1 \leq (y/x) < 1$$

## Equation 5

$$0.25 \leq (y/x) \leq 0.66$$

wherein, in Equations 4 and 5,

x is the amount of the first solid electrolyte in the positive electrode, ,by weight,
y is the amount of the second solid electrolyte in the positive electrode, by weight, and
x and y are both numbers greater than 0.

The ratio (y/x) may be about 0.25 to about 0.66, or about 0.25 to about 0.43.

In some embodiments, a ratio of a D50 particle diameter of the second positive active material (i.e., the small-diameter positive active material) to a D50 particle diameter of the first solid electrolyte may satisfy Equation 6, and/or a ratio of a D50 particle diameter of the first positive active material (i.e., the large-diameter positive active material) to a D50 particle diameter of the second solid electrolyte may satisfy Equation 7:

## Equation 6

$$3 \leq \lambda1 \leq 30$$

## Equation 7

$$3 \leq \lambda2 \leq 30$$

wherein, in Equations 6 and 7,

$\lambda1$ is the ratio of the D50 particle diameter of the second positive active material to the D50 particle diameter of the first solid electrolyte, and
$\lambda2$ is the ratio of a D50 particle diameter of the first positive active material to the D50 particle diameter of the second solid electrolyte.

In Equation 6, $\lambda1$ may be about 3 to about 25, about 3 to about 20, about 3 to about 15, or about 3 to about 10. And, in Equation 7, $\lambda2$ may be about 3 to about 25, about 3 to about 20, about 3 to about 15, or about 3 to about 10.

When the ratio $\lambda1$ of the D50 particle diameter of the second positive active material (i.e., the small-diameter positive active material) to the first D50 particle diameter of the first solid electrolyte, and the ratio $\lambda2$ of the D50 particle diameter of the first positive active material (i.e., the large-diameter positive active material) to the second D50 particle diameter of the second solid electrolyte are within the above ranges, a positive electrode with a high energy density may be prepared.

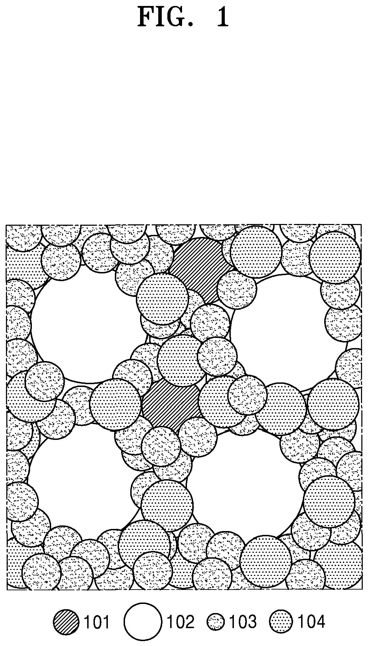

FIG. 1 shows a state of a positive electrode for an all-solid secondary battery according to one or more embodiments.

Referring to this, the positive electrode includes a bimodal positive active material, and includes a second positive active material (i.e., a small-diameter positive active material) 101 and a first positive active material (i.e., a large-diameter positive active material) 102. As such, the positive electrode forms a plurality of pores by containing the bimodal positive active material. The positive electrode according to one or more embodiments includes the second solid electrolyte (i.e., the large-diameter solid electrolyte) 104 and the first solid electrolyte (i.e., the small-diameter solid electrolyte) 103 to reduce the number of pores of the positive electrode to improve electrode density and to reduce grain boundary resistance to improve cell performance. In addition, the positive electrode contains the second solid electrolyte (i.e., the large-diameter solid electrolyte) 104 to improve atmospheric stability, thereby minimizing the decrease in ionic conductivity during the battery preparation processes, and thereby maximizing cell performance.

A thickness of the positive electrode may be about 1 $\mu$m to about 150 $\mu$m, and after pressing, the thickness may be about 50 $\mu$m to about 130 $\mu$m, about 50 $\mu$m to about 120 $\mu$m, about 80 $\mu$m to about 130 $\mu$m, for example, about 100 $\mu$m to about 110 $\mu$m.

A total amount of the first solid electrolyte and the second solid electrolyte combined may be about 2 parts by weight to about 70 parts by weight, about 3 parts by weight to about 50 parts by weight, about 5 parts by weight to about 30 parts by weight, or about 10 parts by weight to about 23 parts by weight, with respect to 100 parts by weight of a total weight of the first positive active material (i.e., the large-diameter positive active material) and the second positive active material (i.e., the small-diameter positive active material) combined. When the total content of the first solid electrolyte and the second solid electrolyte is within the above range, grain boundary resistance may be reduced, and, thus, cell performance is improved.

A D50 particle size of the first positive active material (i.e., the large-diameter positive active material) may be about 14 $\mu$m or greater, or about 14 $\mu$m to about 20 $\mu$m, and a D50 particle size of the second positive active material (i.e., the small-diameter positive active material) may be about 6 $\mu$m or less, for example, about 3 $\mu$m to about 5.5 $\mu$m, in the positive electrode according to one or more embodiments. When the D50 particle sizes of first positive active material (i.e., the large-diameter positive active material) and the second positive active material (i.e., the small-diameter positive active material) are in the above range, energy density per volume of the positive electrode may be increased.

The first solid electrolyte and the second solid electrolyte contained in the positive electrode according to one or more embodiments may be monolith particles or one body particles. A monolith particle refers to a structure in which particles exist in a morphologically independent phase, and a particle that is distinct from a secondary particle, which is an aggregate of primary particles.

As used herein, it is to be understood that when the particles are spherical, the term "size" refers to an average particle diameter, and when the particles are non-spherical, the term refers to an average major axis length. A size of particles may be measured using a scanning electron microscope or particle size analyzer. As a particle size analyzer, for example, HORIBA's LA-950 laser particle size analyzer may be used. When particle sizes are measured by using a particle size analyzer, the average particle diameter refers to D50. D50 means an average diameter of particles whose cumulative volume corresponds to 50 vol% in a particle size distribution, and in a distribution curve in which volumes of particles are accumulated in order from the smallest particle to the largest particle, when a total number of particles is set to 100 %, D50 refers to a particle diameter value corresponding to 50 % from the smallest particles. In the description, "particle size" and "particle diameter" are interchangeably used.

In the present specification, a size of the positive active material means a median diameter D50 measured by using, for example, a laser-type particle size distribution meter.

The D50 particle size of the positive active material and the D50 particle diameter of the solid electrolyte may be measured, for example, by using a laser diffraction method, more specifically, the positive active material or the solid electrolyte may be dispersed in a solution, and then introduced into a commercially available laser diffraction particle size measuring device (for example, Microtrac MT 3000), ultrasonic waves of about 28 kHz may be irradiated with an output of 60 W, and then the average particle diameter (D50) on the basis of 50 % of the particle diameter distribution in the measuring device may be calculated.

As used herein, an average particle diameter may be a median diameter measured by using a laser particle size distribution device.

As used herein, the term "D10 particle diameter" means an average diameter of particles whose cumulative volume corresponds to 10 vol% in a particle size distribution, and the term "D90 particle diameter" means an average diameter of particles whose cumulative volume corresponds to 90 vol% in the particle size distribution.

As used herein, a particle size distribution of the first solid electrolyte is defined as $(d_1 90 - di10) / d_1 50$, and a particle size distribution of the second solid electrolyte is defined as $(d_2 90 - d_2 10) / d_2 50$.

The first solid electrolyte and the second solid electrolyte may include a compound having an argyrodite-type crystal structure and that may be represented by Formula 1 below:

Formula 1 $\qquad$ $Li_a M1_x PS_y M2_z M3_w$,

wherein, in the formula, M1 may be one or more metalloid element or metal element of Groups 1 to 15 of the Periodic Table of the Elements, provided that M1 is not Li, M2 may be one or more element of Group 17 of the Periodic Table of the Elements, and M3 may be $S_m O_n$, $4 \leq a \leq 8$, $0 \leq x < 1$, $3 \leq y \leq 7$, $0 < z \leq 2$, $0 \leq w < 2$, $1 < m \leq 4$, and $1.5 \leq n \leq 5$.

A sulfide-containing solid electrolyte may have excellent ionic conductivity and chemical stability. Thus, the sulfide-containing solid electrolyte may provide improved stability against air and electrochemical stability against lithium metal.

Average particle diameters of the first solid electrolyte and the second solid electrolyte mean median diameters D50 measured by using, for example, a laser-type particle size distribution analyzer.

In a compound represented by Formula 1, M1 may include, for example, Na, K, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof. M1 may be, for example, a monovalent cation or a divalent cation.

In the compound represented by Formula 1, M1 may include, for example, Na, K, Cu, Mg, Ag, or a combination thereof. M1 may be, for example, a monovalent cation.

In the compound represented by Formula 1, M2 may include, for example, F, Cl, Br, I, or a combination thereof. M2 may be, for example, a monovalent anion.

In the compound represented by Formula 1, $S_m O_n$ of M3 may be, for example, SaOs, $S_3 O_6$, $S_2 O_3$, $S_2 O_4$, $S_2 O_5$, $S_2 O_6$, $S_2 O_7$, $S_2 O_3$, $SO_4$, SOs, or a combination thereof. $S_m O_n$ may be, for example, a divalent anion, such as $S_m O_n^{2-}$. In some embodiments, $S_m O_n^{2-}$ may be, for example, $S_4 O_6^{2-}$, $S_3 O_6^{2-}$, $S_2 O_3^{2-}$, $S_2 O_4^{2-}$, $S_2 O_5^{2-}$, $S_2 O_6^{2-}$, $S_2 O_7^{2-}$, $S_2 O_8^{2-}$, $SO_4^{2-}$, $SO_5^{2-}$, or a combination thereof.

The compound represented by Formula 1 may be, for example, a compound represented by one of Formulas 1a and 1b below:

Formula 1a $\qquad$ $Li_a PS_y M2_z$

wherein, in Formula 1a, M2 may be one or more elements selected from Group 17 of the Periodic Table of the Elements, $4 \leq a \leq 8$, $3 \leq y \leq 7$, and $0 < z \leq 2$.

For example, the compound represented by Formula 1a may be a compound including M2, and not including M1 and M3.

$$\text{Formula 1b} \qquad \text{Li}_a\text{M1}_x\text{PS}_y\text{M2}_z$$

wherein, in Formula 1b, M1 may be one or more metalloid element or metal element from Groups 1 to 15 of the Periodic Table of the Elements, other than Li, and M2 may be one or more element from Group 17 of the Periodic Table of the Elements, $4 \leq a \leq 8$, $0 < x < 1$, $3 \leq y \leq 7$, and $0 < z \leq 2$.

The compound represented by Formula 1b may be a compound including M1 and M2 and not including M3.

The compound represented by Formula 1 may be, for example, a compound represented by one of Formulas 1c and 1d below:

$$\text{Formula 1c} \qquad \text{Li}_a\text{PS}_y\text{M2}_z\text{M3}_w$$

wherein, in Formula 1c, M2 may be one or more elements selected from group 17 of the periodic table, M3 may be $\text{S}_m\text{O}_n$, $4 \leq a \leq 8$, $3 \leq y \leq 7$, $0 < z \leq 2$, $0 < w < 2$, $1 \leq m \leq 4$, and $1.5 \leq n \leq 5$, wherein the compound represented by Formula 1c is a compound not including M1, and including M2 and M3,

$$\text{Formula 1d} \qquad \text{Li}_a\text{M1}_x\text{PS}_y\text{M2}_z\text{M3}_w,$$

wherein, in Formula 1d, M1 may be one or more metalloid element or metal element from Group 1 to Group 15 of the Periodic Table of the Elements, other than Li, M2 may be one or more element from Group 17 of the Periodic Table of the Elements, M3 may be $\text{S}_m\text{O}_n$, $4 \leq a \leq 8$, $0 < x < 1$, $3 \leq y \leq 7$, $0 < z \leq 2$, $0 < w < 2$, $1 \leq m \leq 4$, and $1.5 \leq n \leq 5$.

The compound represented by Formula 1d may be a compound including all of M1, M2, and M3.

The compound represented by Formula 1 may be, for example, a compound represented by Formula 2 below:

$$\text{Formula 2} \qquad \text{Li}_{7-m' \times v-z}\text{M1}_v\text{PS}_{6-z-w}\text{M2}_z\text{M3}_w,$$

wherein, in Formula 2, M1 may be one or more metalloid element or metal element from Group 1 to Group 15 of the Periodic Table of the Elements, provide that M1 is not Li, m may be an oxidation number of M1, M2 may be one or more element from Group 17 of the Periodic Table of the Elements, M3 may be $\text{S}_m\text{O}_n$, $0 \leq v < 1$, $0 < z \leq 2$, $0 \leq w < 2$, $1 \leq m \leq 4$, $1.5 \leq n \leq 5$, $1 \leq m' \leq 2$, and $0 < v+w < 3$.

For example, $0 \leq v \leq 0.7$, $0 < z \leq 2$, and $0 \leq w \leq 0.5$. For example, $0 \leq v \leq 0.5$, $0 < z \leq 2$, and $0 \leq w \leq 0.2$. For example, $0 \leq v \leq 0.3$, $0.2 \leq z \leq 1.8$ and $0 \leq w \leq 0.1$. For example, $0 \leq v \leq 0.1$, $0.5 \leq z \leq 1.8$ and $0 \leq w \leq 0.1$. For example, $0 \leq v \leq 0.05$, $1.0 \leq z \leq 1.8$ and $0 \leq w \leq 0.1$.

The compound represented by Formula 1 may be, for example, a compound represented by Formula 2a below:

$$\text{Formula 2a} \qquad \text{Li}_{7-z}\text{PS}_{6-z}\text{M2}_z,$$

wherein, in the formula, M2 may be one or more element from Group 17 of the Periodic Table of the Elements, and $0 < z \leq 2$.

The compound represented by Formula 2a may be a compound including M2, and not including M1 and M3.

The compound represented by Formula 1 may be, for example, a compound represented by Formula 2b below:

$$\text{Formula 2b} \qquad \text{Li}_{7-m' \times v-z}\text{M1}_v\text{PS}_{6-z}\text{M2}_z$$

wherein, in the formula, M1 may be one or more metalloid element or metal element, from Groups 1 to 15 of the Periodic Table of the Elements, provided that M1 is not Li, m may be an oxidation number of M1, M2 may be one or more elements selected from group 17 of the periodic table, $0 < v < 1$, $0 < z \leq 2$, and $1 \leq m' \leq 2$.

The compound represented by Formula 2b may be a compound including M1 and M2 but not including M3. M1 may be, for example, one metal element, one metalloid element or two or more metalloid elements or metal elements.

The compound represented by Formula 1 may be, for example, a compound represented by Formula 2c below:

$$\text{Formula 2c} \qquad \text{Li}_{7-z}\text{PS}_{6-z-w}\text{M2}_z\text{M3}_w,$$

wherein, in the formula, M2 may be one or more elements selected from Group 17 of the periodic table, M3 may be $\text{S}_m\text{O}_n$, $0 < z \leq 2$, $0 < w < 2$, $1 \leq m \leq 4$, and $1.5 \leq n \leq 5$.

The compound represented by Formula 2c may be a compound not including M1, and including M2 and M3.

The compound represented by Formula 1 may be, for example, a compound represented by Formula 2d below:

Formula 2d $\quad\quad$ $Li_{7-m-v-z}M1_vPS_{6-z-w}M2_zM3_w,$

Wherein, in the formula, M1 may be one or more metalloid element or metal element from Group 1 to Group 15 of the Periodic Table of the Elements, provided that M1 is not Li, m' may be an oxidation number of M1, M2 may be one or more element from Group 17 of the Periodic Table of the Elements, M3 may be $S_mO_n$, $0<v<1$, $0<z\leq2$, $0<w<2$, $1.5\leq n\leq5$, and $1\leq m\leq2$.

The compound represented by Formula 2d may be a compound including M1, M2, and M3. M1 may be, for example, one metalloid element or metal element or two or more metalloid elements or metal elements. M2 may be, for example, one halogen element or two or more halogen elements.

The compound represented by Formula 1 may be, for example, a compound represented by Formula 3 below:

Formula 3 $\quad\quad$ $Li_{7-m'-v-z}M4_vPS_{6-z}M5_{z1}M6_{z2}$

wherein, in the formula, M4 may be Na, K, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof, m' may be an oxidation number of M4, M5 and M6 may each independently be F, Cl, Br, or I, $0<v<0.7$, $0<z1<2$, $0\leq z2<1$, $0<z<2$, $z=z1+z2$, and $1\leq m'\leq2$. For example, $0<v\leq0.7$, $0<z1<2$, $0\leq z2\leq0.5$, $0<z<2$, and $z=z1+z2$. For example, $0<v\leq0.5$, $0<z1<2$, $0\leq z2\leq0.5$, $0<z<2$, and $z=z1+z2$. For example, $0<v\leq0.3$, $0<z1\leq1.5$, $0\leq z2\leq0.5$, $0.2\leq z\leq1.8$, and $z=z1+z2$. For example, $0<v\leq0.1$, $0<z1\leq1.5$, $0\leq z2\leq0.5$, $0.5\leq z\leq1.8$, and $z=z1+z2$. For example, $0<v\leq0.05$, $0<z1\leq1.5$, $0\leq z2\leq0.2$, $1.0\leq z\leq1.8$, and $z=z1+z2$.

M4 may be, for example, one metalloid element, one metal element, or two or more metalloid elements or metal elements.

The compound represented by Formula 3 may include, for example, one halogen element or two halogen elements.

The compound represented by Formula 1 may be, for example, a compound represented by one of Formulas 3a to 3f below:

Formula 3a $\quad\quad$ $Li_{7-z}PS_{6-z}M5_{z1}M6_{z2}$

Formula 3b $\quad\quad$ $Li_{7-v-z}Na_vPS_{6-z}M5_{z1}M6_{z2}$

Formula 3c $\quad\quad$ $Li_{7-v-z}K_vPS_{6-z}M5_{z1}M6_{z2}$

Formula 3d $\quad\quad$ $Li_{7-v-z}Cu_vPS_{6-z}M5_{z1}M6_{z2}$

Formula 3e $\quad\quad$ $Li_{7-v-z}Mg_vPS_{6-z}M5_{z1}M6_{z2}$

Formula 3f $\quad\quad$ $Li_{7-v-z}Ag_vPS_{6-z}M5_{z1}M6_{z2},$

wherein, in Formulas 3a to 3f, M5 and M6 may each independently be F, Cl, Br, or I, $0<v<0.7$, $0<z1<2$, $0\leq z2<1$, $0<z<2$, and $z=z1+z2$. For example, $0<v\leq0.7$, $0<z1<2$, $0\leq z2\leq0.5$, $0<z<2$, and $z=z1+z2$. For example, $0<v\leq0.5$, $0<z1<2$, $0\leq z2\leq0.5$, $0<z<2$, and $z=z1+z2$. For example, $0<v\leq0.3$, $0<z1\leq1.5$, $0\leq z2\leq0.5$, $0.2\leq z\leq1.8$, and $z=z1+z2$. For example, $0<v\leq0.1$, $0<z1\leq1.5$, $0\leq z2\leq0.5$, $0.5\leq z\leq1.8$, and $z=z1+z2$. For example, $0<v\leq0.05$, $0<z1\leq1.5$, $0\leq z2\leq0.2$, $1.0\leq z\leq1.8$, and $z=z1+z2$.

The compound represented by Formula 1 may be, for example, a compound represented by one or more of $Li_{7-v-z}Na_vPS_{6-z}F_{z1}$, $Li_{7-v-z}Na_vPS_{6-z}Cl_{z1}$, $Li_{7-v-z}Na_vPS_{6-z}Br_{z1}$, $Li_{7-v-z}Na_vPS_{6-z}I_{z1}$, $Li_{7-v-z}Na_vPS_{6-z}F_{z1}Cl_{z2}$, $Li_{7-v-z}Na_vPS_{6-z}F_{z1}Br_{z2}$, $Li_{7-v-z}Na_vPS_{6-z}F_{z1}I_{z2}$, $Li_{7-v-z}Na_vPS_{6-z}Cl_{z1}Br_{z2}$, $Li_{7-v-z}Na_vPS_{6-z}Cl_{z1}I_{z2}$, $Li_{7-v-z}Na_vPS_{6-z}Cl_{z1}F_{z2}$, $Li_{7-v-z}Na_vPS_{6-z}Br_{z1}I_{z2}$, $Li_{7-v-z}Na_vPS_{6-z}Br_{z1}F_{z2}$, $Li_{7-v-z}Na_vPS_{6-z}Br_{z1}Cl_{z2}$, $Li_{7-v-z}Na_vPS_{6-z}I_{z1}F_{z2}$, $Li_{7-v-z}Na_vPS_{6-z}I_{z1}Cl_{z2}$, $Li_{7-v-z}Na_vPS_{6-z}I_{z1}Br_{z2}$, $Li_{7-v-z}K_vPS_{6-z}F_{z1}$, $Li_{7-v-z}K_vPS_{6-z}Cl_{z1}$, $Li_{7-v-z}K_vPS_{6-z}Br_{z1}$, $Li_{7-v-z}K_vPS_{6-z}I_{z1}$, $Li_{7-v-z}K_vPS_{6-z}F_{z1}Cl_{z2}$, $Li_{7-v-z}K_vPS_{6-z}F_{z1}Br_{z2}$, $Li_{7-v-z}K_vPS_{6-z}F_{z1}I_{z2}$, $Li_{7-v-z}K_vPS_{6-z}Cl_{z1}Br_{z2}$, $Li_{7-v-z}K_vPS_{6-z}Cl_{z1}I_{z2}$, $Li_{7-v-z}K_vPS_{6-z}Cl_{z1}F_{z2}$, $Li_{7-v-z}K_vPS_{6-z}Br_{z1}I_{z2}$, $Li_{7-v-z}K_vPS_{6-z}Br_{z1}F_{z2}$, $Li_{7-v-z}K_vPS_{6-z}Br_{z1}Cl_{z2}$, $Li_{7-v-z}K_vPS_{6-z}I_{z1}F_{z2}$, $Li_{7-v-z}K_vPS_{6-z}I_{z1}Cl_{z2}$, $Li_{7-v-z}K_vPS_{6-z}I_{z1}Br_{z2}$, $Li_{7-v-z}Cu_vPS_{6-z}F_{z1}$, $Li_{7-v-z}Cu_vPS_{6-z}Cl_{z1}$, $Li_{7-v-z}Cu_vPS_{6-z}Br_{z1}$, $Li_{7-v-z}Cu_vPS_{6-z}I_{z1}$, $Li_{7-v-z}Cu_vPS_{6-z}F_{z1}Cl_{z2}$, $Li_{7-v-z}Cu_vPS_{6-z}F_{z1}Br_{z2}$, $Li_{7-v-z}Cu_vPS_{6-z}F_{z1}I_{z2}$, $Li_{7-v-z}Cu_vPS_{6-z}Cl_{z1}Br_{z2}$, $Li_{7-v-z}Cu_vPS_{6-z}Cl_{z1}I_{z2}$, $Li_{7-v-z}Cu_vPS_{6-z}Cl_{z1}F_{z2}$, $Li_{7-v-z}Cu_vPS_{6-z}Br_{z1}I_{z2}$, $Li_{7-v-z}Cu_vPS_{6-z}Br_{z1}F_{z2}$, $Li_{7-v-z}Cu_vPS_{6-z}Br_{z1}Cl_{z2}$, $Li_{7-v-z}Cu_vPS_{6-z}I_{z1}F_{z2}$, $Li_{7-v-z}Cu_vPS_{6-z}I_{z1}Cl_{z2}$, $Li_{7-v-z}Cu_vPS_{6-z}I_{z1}Br_{z2}$, $Li_{7-2v-z}Mg_vPS_{6-z}F_{z1}$, $Li_{7-2v-z}Mg_vPS_{6-z}Cl_{z1}$, $Li_{7-2v-z}Mg_vPS_{6-z}Br_{z1}$, $Li_{7-2v-z}Mg_vPS_{6-z}I_{z1}$, $Li_{7-2v-z}Mg_vPS_{6-z}F_{z1}Cl_{z2}$, $Li_{7-2v-z}Mg_vPS_{6-z}F_{z1}Br_{z2}$, $Li_{7-2v-z}Mg_vPS_{6-z}F_{z1}I_{z2}$, $Li_{7-2v-z}Mg_vPS_{6-z}Cl_{z1}Br_{z2}$, $Li_{7-2v-z}Mg_vPS_{6-z}Cl_{z1}I_{z2}$, $Li_{7-2v-z}Mg_vPS_{6-z}Cl_{z1}F_{z2}$, $Li_{7-2v-z}Mg_vPS_{6-z}Br_{z1}I_{z2}$, $Li_{7-2v-z}Mg_vPS_{6-z}Br_{z1}F_{z2}$, $Li_{7-2v-z}Mg_vPS_{6-z}Br_{z1}Cl_{z2}$, $Li_{7-2v-z}Mg_vPS_{6-z}I_{z1}F_{z2}$, $Li_{7-2v-z}Mg_vPS_{6-z}I_{z1}Cl_{z2}$, $Li_{7-2v-z}Mg_vPS_{6-z}I_{z1}Br_{z2}$, $Li_{7-v-z}Ag_vPS_{6-z}F_{z1}$, $Li_{7-v-z}Ag_vPS_{6-z}Cl_{z1}$, $Li_{7-v-z}Ag_vPS_{6-z}Br_{z1}$, $Li_{7-v-z}Ag_vPS_{6-z}I_{z1}$, $Li_{7-v-z}Ag_vPS_{6-z}F_{z1}Cl_{z2}$, $Li_{7-v-z}Ag_vPS_{6-z}F_{z1}Br_{z2}$, $Li_{7-v-z}Ag_vPS_{6-z}F_{z1}I_{z2}$, $Li_{7-v-z}Ag_vPS_{6-z}Cl_{z1}Br_{z2}$, $Li_{7-v-z}Ag_vPS_{6-z}Cl_{z1}I_{z2}$, $Li_{7-v-z}Ag_vPS_{6-z}Cl_{z1}F_{z2}$, $Li_{7-v-z}Ag_vPS_{6-z}Br_{z1}I_{z2}$,

$Li_{7-v-z}Ag_vPS_{6-z}Br_{z1}F_{z2}$, $Li_{7-v-z}Ag_vPS_{6-z}Br_{z1}Cl_{z2}$, $Li_{7-v-z}Ag_vPS_{6-z}I_{z1}F_{z2}$, $Li_{7-v-z}Ag_vPS_{6-z}I_{z1}Cl_{z2}$, or $Li_{7-v-z}Ag_vPS_{6-z}I_{z1}Br_{z2}$, wherein $0<v<0.7$, $0<z1<2$, $0<z2<1$, $0<z<2$, and $z=z1+z2$. For example, $0<v\leq0.7$, $0<z1<2$, $0<z2\leq0.5$, $0<z<2$, and $z=z1+z2$. For example, $0<v\leq0.5$, $0<z1<2$, $0<z2\leq0.5$, $0<z<2$, and $z=z1+z2$. For example, $0<v\leq0.3$, $0<z1\leq1.5$, $0<z2\leq0.5$, $0.2\leq z\leq1.8$, and $z=z1+z2$. For example, $0<v\leq0.1$, $0<z1\leq1.5$, $0<z2\leq0.5$, $0.5\leq z\leq1.8$, and $z=z1+z2$. For example, $0<v\leq0.05$, $0<z1\leq1.5$, $0<z2\leq0.2$, $1.0\leq z\leq1.8$, and $z=z1+z2$.

The compound represented by Formula 1 may be, for example, a compound represented by Formula 4 below:

Formula 4    $Li_{7-m'-v-z}M4_vPS_{6-z-w}M7_z(SO_4)_w$

wherein, in the formula, M4 may be Na, K, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof, m' may be an oxidation number of M4, M7 may be F, Cl, Br, I, or a combination thereof, $0<v<1$, $0<z\leq2$, $0<w<1$, and $1\leq m'\leq2$. For example, $0<v\leq0.7$, $0<z\leq2$, and $0<w\leq0.5$. For example, $0<v\leq0.5$, $0<z\leq2$, and $0<w\leq0.2$. For example, $0<v\leq0.3$, $0.2\leq z\leq1.8$, and $0<w\leq0.1$. For example, $0<v\leq0.1$, $0.5\leq z\leq1.8$, and $0<w\leq0.1$. For example, $0<v\leq0.05$, $1.0\leq z\leq1.8$ and $0<w\leq0.1$.

The compound represented by Formula 1 may be, for example, a compound represented by one of Formulas 4a to 4f below:

Formula 4a    $Li_{7-z}PS_{6-z-w}M7_z(SO_4)_w$

Formula 4b    $Li_{7-v-z}Na_vPS_{6-z-w}M7_z(SO_4)_w$

Formula 4c    $Li_{7-v-z}K_vPS_{6-z-w}M7_z(SO_4)_w$

Formula 4d    $Li_{7-v-z}Cu_vPS_{6-z-w}M7_z(SO_4)_w$

Formula 4e    $Li_{7-2v-z}Mg_vPS_{6-z-w}M7_z(SO_4)_w$

Formula 4f    $Li_{7-v-z}Ag_vPS_{6-z-w}M7_z(SO_4)_w$ $Li_{7-v-z}Cu_vPS_{6-z-w}M7_z(SO_4)_w$

wherein, in Formulas 4a to 4f, M7 may be F, Cl, Br, I, or a combination thereof, $0<v<0.7$, $0<z\leq2$, and $0<w<0.2$. For example, $0<v\leq0.7$, $0<z\leq2$, and $0<w<0.2$. For example, $0<v\leq0.5$, $0<z\leq2$, and $0<w<0.2$. For example, $0<v\leq0.3$, $0.2\leq z\leq1.8$, and $0<w\leq0.1$. For example, $0<v\leq0.1$, $0.5\leq z\leq1.8$, and $0<w\leq0.1$. For example, $0<v\leq0.05$, $1.0\leq z\leq1.8$, and $0<w\leq0.1$.

The compound represented by Formula 1 may be, for example, a compound represented by one or more of $Li_{7-z}PS_{6-z-w}F_z(SO_4)_w$, $Li_{7-z}PS_{6-z-w}Cl_z(SO_4)_w$, $Li_{7-z}PS_{6-z-w}Br_z(SO_4)_w$, $Li_{7-z}PS_{6-z-w}I_z(SO_4)_w$, $Li_{7-v-z}Na_vPS_{6-z-w}F_z(SO_4)_w$, $Li_{7-v-z}Na_vPS_{6-z-w}Cl_z(SO_4)_w$, $Li_{7-v-z}Na_vPS_{6-z-w}Br_z(SO_4)_w$, $Li_{7-v-z}Na_vPS_{6-z-w}I_z(SO_4)_w$, $Li_{7-v-z}K_vPS_{6-z-w}F_z(SO_4)_w$, $Li_{7-v-z}K_vPS_{6-z-w}Cl_z(SO_4)_w$, $Li_{7-v-z}K_vPS_{6-z-w}Br_z(SO_4)_w$, $Li_{7-v-z}K_vPS_{6-z-w}I_z(SO_4)_w$, $Li_{7-v-z}Cu_vPS_{6-z-w}F_z(SO_4)_w$, $Li_{7-v-z}Cu_vPS_{6-z-w}Cl_z(SO_4)_w$, $Li_{7-v-z}Cu_vPS_{6-z-w}Br_z(SO_4)_w$, $Li_{7-v-z}Cu_vPS_{6-z-w}I_z(SO_4)_w$, $Li_{7-2v-z}Mg_vPS_{6-z-w}F_z(SO_4)_w$, $Li_{7-2v-z}Mg_vPS_{6-z-w}Cl_z(SO_4)_w$, $Li_{7-2v-z}Mg_vPS_{6-z-w}Br_z(SO_4)_w$, $Li_{7-2v-z}Mg_vPS_{6-z-w}I_z(SO_4)_w$, $Li_{7-v-z}Ag_vPS_{6-z-w}F_z(SO_4)_w$, $Li_{7-v-z}Ag_vPS_{6-z-w}Cl_z(SO_4)_w$, $Li_{7-v-z}Ag_vPS_{6-z-w}Br_z(SO_4)_w$, or $Li_{7-v-z}Ag_vPS_{6-z-w}I_z(SO_4)_w$, wherein $0<v<1$, $0<z\leq2$, and $0<w<0.2$. For example, $0<v\leq0.7$, $0<z\leq2$, and $0<w<0.2$. For example, $0<v\leq0.5$, $0<z\leq2$, and $0<w<0.2$. For example, $0<v\leq0.3$, $0.2\leq z\leq1.8$, and $0<w\leq0.1$. For example, $0<v\leq0.1$, $0.5\leq z\leq1.8$, and $0<w\leq0.1$. For example, $0<v\leq0.05$, $1.0\leq z\leq1.8$ and $0<w\leq0.1$.

The compound represented by Formula 1 may belong to, for example, a cubic crystal system, and more specifically, the compound represented by Formula 1 may belong to a F-43m space group.

Also, the compound represented by Formula 1 as described herein, may be an argyrodite-type sulfide having an argyrodite-type crystal structure. The compound represented by Formula 1 includes, for example, at least one of a monovalent cation element and a divalent cation element substituted at some of the lithium sites in an argyrodite-type crystal structure, or includes a heterogeneous halogen element, or $S_mO_n$ anions substituted at halogen sites, and thus, lithium-ion conductivity may be further improved, and electrochemical stability against lithium metal may be further improved.

The compound represented by Formula 1 may have a peak at a position of, for example, two theta ($2\Theta$) of $25.48° \pm 0.50°$, $30.01° \pm 1.0°$, $31.38° \pm 0.50°$, $46.0° \pm 1.0°$, $48.5° \pm 1.0°$, and $53.0° \pm 1.0°$, in an X-ray diffraction (XRD) spectrum using CuK$\alpha$ radiation. Since the compound represented by Formula 1 has an argyrodite-type structure, the compound may have such a peak in an XRD spectrum using CuK$\alpha$ radiation. The compound represented by Formula 1 may be, for example, a solid ion conductor compound.

A sulfide-containing solid electrolyte may be in a form of a powder.

Among the above-mentioned sulfide-containing solid electrolytes, for example, a solid electrolyte having a composition in which Cu and at least one of Zn, Si, Sn, or Ge may be co-substituted into an argyrodite ($Li_6PS_5Cl$) structure

has improved atmospheric stability. Through this, it is possible to minimize grain boundary resistance in the positive electrode, making it possible to realize a secondary battery with high energy density, and at the same time to prepare an all-solid secondary battery with improved atmospheric stability.

In an all-solid secondary battery according to one or more embodiments, the positive electrode includes, as a first solid electrolyte and a second solid electrolyte, a compound represented by Formula 15:

Formula 15 $\qquad$ $Li_aM_xPS_b(Cl)_d$

wherein, in Formula 15, M may be Na, K, Fe, Mg, Ca, Ag, Cu, Zr, Zn, or a combination thereof, $0 \leq x \leq 0.07$, $5 \leq a \leq 6$, $4 \leq b \leq 6$, $0 < d \leq 2$, and $5 \leq a+x \leq 6$.

According to one or more embodiments, the first solid electrolyte may include a compound represented by Formula 12, a compound represented by Formula 12-1, or a compound represented by Formula 13 below:

Formula 12 $\qquad$ $Li_{7-x}PS_{6-x}Cl_x$

wherein in Formula 12, $0 < x \leq 2$,

Formula 13 $\qquad$ $Li_{7-v-z}Cu_vPS_{6-z-w}Cl_z(SO_4)_w$,

wherein, in Formula 13, $0 < v < 0.7$, $0 < z \leq 2$, and $0 < w < 0.2$,

Formula 12-1 $\qquad$ $Li_aPS_b(Cl)_d$

wherein in Formula 12-1, $5 \leq a < 7$, $4 \leq b \leq 6$, and $0 < d \leq 2$.

In Formula 12-1, $5 \leq a \leq 6$, $4 \leq b \leq 5$, and $0 < d \leq 1.8$ or $0 < d \leq 1.5$.

The second solid electrolyte may include a compound represented by Formula 12, a compound represented by Formula 12-1, or a compound represented by Formula 14 below:

Formula 12 $\qquad$ $Li_{7-x}PS_{6-x}Cl_x$,

wherein, in Formula 12, $0 < x \leq 2$,

Formula 14 $\qquad$ $Li_{7-v-z}Cu_vPS_{6-z}Cl_z$,

wherein, in Formula 14, $0 < v < 0.7$, and $0 < z \leq 2$.

Formula 12-1 $\qquad$ $Li_aPS_b(Cl)_d$

wherein in Formula 12-1, $5 \leq a < 7$, $4 \leq b \leq 6$, and $0 < d \leq 2$.

In Formula 12-1, $5 \leq a \leq 6$, $4 \leq b \leq 5$, and $0 < d \leq 1.8$ or $0 < d \leq 1.5$.

The ionic conductivity of the first solid electrolyte and the second solid electrolyte may be, each independently about 1 millisiemens per centimeter (mS/cm) to about 7 mS/cm, or about 1 mS/cm to about 6 mS/cm, at 25°C.

The positive electrode may further include a binder. The binder may include at least one of a styrene-butadiene-styrene copolymer, a (meth)acrylic resin, a styrene-butadiene rubber (SBR), a poly(tetrafluoroethylene) (PTFE), a poly(vinylidene fluoride) (PVDF), a polyethylene, a vinylidene fluoride/hexafluoropropylene copolymer, a poly(acrylonitrile), a poly(methyl (meth)acrylate), or a combination thereof.

According to another aspect, provided is an all-solid secondary battery including: the above-described positive electrode; a negative electrode; and a solid electrolyte arranged between the positive electrode and the negative electrode.

The negative electrode may include a negative current collector and a first negative active material layer arranged on the negative current collector, wherein the first negative active material layer may include: a carbon-containing negative active material; or a carbon-containing negative active material, and a first negative active material including at least one or a metal or a metalloid.

The carbon-containing negative active material may include, for example, amorphous carbon, and the first negative active material may include indium, silicon, gallium, tin, aluminum, titanium, zirconium, niobium, germanium, antimony, bismuth, gold, platinum, palladium, magnesium, silver, zinc, nickel, iron, cobalt, chromium, cesium, sodium, potassium, calcium, yttrium, tantalum, hafnium, barium, vanadium, strontium, lanthanum, or a combination thereof.

The first negative active material may include i) a composite of first particles comprising amorphous carbon

and second particles comprising a metal or a metalloid, or ii) a mixture of first particles comprising amorphous carbon and second particles comprising a metal or a metalloid, and an amount of the second particles may be about 1 wt% to about 60 wt%, with respect to a total weight of the composite or the mixture.

The solid electrolyte may include an oxide-containing solid electrolyte, a sulfide-containing solid electrolyte, or a combination thereof.

The negative current collector, the first negative active material layer, and/or a region therebetween may be a Li metal-free region that does not contain lithium (Li) metal, in an initial state or a post-discharge state of the all-solid secondary battery.

Hereinafter, an all-solid secondary battery according to one or more embodiments will be described in further detail with reference to the accompanying drawings.

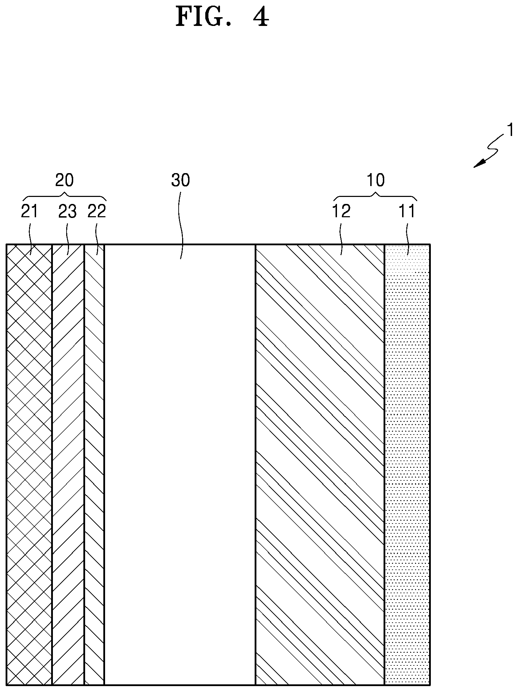

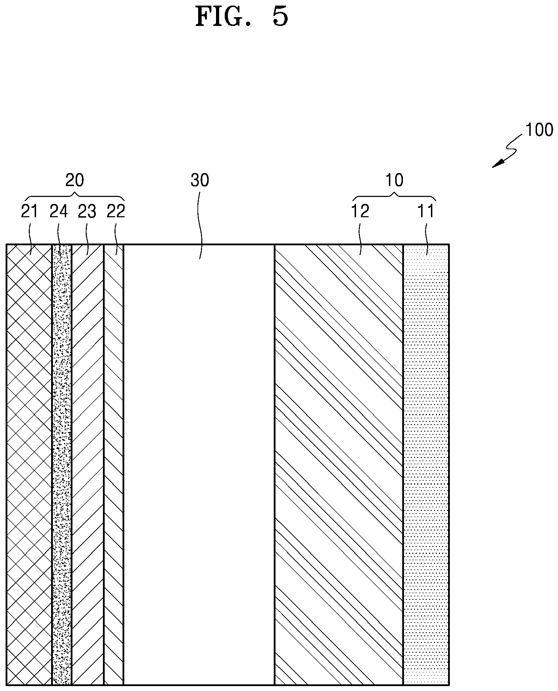

Referring to FIGS. 4 and 5, the all-solid secondary battery 1 may include a negative electrode 20 including a negative current collector layer 21 and a first negative active material layer 22; a positive electrode 10 including a positive active material layer 12 containing a first active material (i.e., a large-diameter active material), a second active material (i.e., a small-diameter active material), a first solid electrolyte, and a second solid electrolyte; and a solid electrolyte layer 30 disposed between the negative electrode 20 and the positive electrode 10.

A D50 particle size of the first positive active material (i.e., the large-diameter positive active material) may be about 14 $\mu$m or greater, for example, about 14 $\mu$m to about 20 $\mu$m. In addition, a D50 particle size of the second positive active material (i.e., the small-diameter positive active material) may be about 6 $\mu$m or less, for example, about 2 $\mu$m to about 6 $\mu$m, or about 3 $\mu$m to about 5.5 $\mu$m.

The positive electrode 10 may further include a suitable conductive agent. In addition, the positive electrode 10 may further include a suitable binder.

Negative electrode

The negative electrode 20 may include a negative current collector 21 and a first negative active material layer 22, and the first negative active material layer 22 may include a negative active material.

The negative active material included in the first negative active material layer 22 may have, for example, a particle form. A D50 particle diameter of the negative active material having a particle form may be, for example, about 4 $\mu$m or less, about 3 $\mu$m or less, about 2 $\mu$m or less, about 1 $\mu$m or less, or about 900 nm or less. The D50 particle diameter of the negative active material having a particle form may be, for example, about 10 nm to about 4 $\mu$m, about 10 nm to about 3 $\mu$m, about 10 nm to about 2 $\mu$m, about 10 nm to about 1 $\mu$m, or about 10 nm to about 900 nm. When the negative active material has a D50 particle diameter in this range, reversible absorption and/or desorption of lithium at a time of charging/discharging may be easier. The D50 particle diameter of the negative active material is, for example, a median diameter (D50) measured by using a laser particle size distribution device.

The negative electrode may include a negative current collector and a first negative active material layer containing a negative active material disposed on the negative current collector, the negative active material may include a carbon-containing negative active material and at least one of a metal negative active material or a metalloid negative active material, and the carbon-containing negative active material may include at least one of amorphous carbon or crystalline carbon. In addition, the metal negative active material or the metalloid negative active material may be at least one of gold, platinum, palladium, silicon, silver, aluminum, bismuth, tin, or zinc.

The negative electrode may include a second negative active material layer arranged on at least one position selected from between the negative current collector and the first negative active material layer, and between the solid electrolyte layer and the first negative active material layer, and the second negative active material layer may be a metal layer including lithium or a lithium alloy.

The amorphous carbon may be, for example, carbon black (CB), acetylene black (AB), furnace black (FB), Ketjen black (KB), graphene, or the like, but embodiments are not limited thereto, and any suitable amorphous carbon in the art may be used. Amorphous carbon has a very low or no crystallinity and is distinguished from crystalline carbon or graphite carbon.

The first negative active material layer 22 includes a negative active material, or a mixture of a plurality of different negative active materials, among such negative active materials. For example, the first negative active material layer 22 may include amorphous carbon only or, at least one of gold, platinum, palladium, silicon, silver, aluminum, bismuth, tin, or zinc. Alternatively, the first negative active material layer 22 may include a mixture of amorphous carbon and at least one of gold, platinum, palladium, silicon, silver, aluminum, bismuth, tin, or zinc. A mixing ratio of of amorphous carbon to the metal or the metalloid in the mixture may be, for example, about 10:1 to about 1:2, about 5:1 to about 1:1, or about 4:1 to about 2:1 by weight, but embodiments are not limited thereto, and may be selected according to characteristics of the all-solid secondary battery 1. As the negative active material has such a composition, cycle characteristics of the all-solid secondary battery 1 may be further improved.

The negative active material included in the first negative active material layer 22 may include, for example, a mixture of first particles comprising amorphous carbon and second particles comprising a metal or a metalloid. The metal or metalloid may include, for example, gold, platinum, palladium, silicon, silver, aluminum, bismuth, tin , or zinc. The metalloid may be, alternatively, a semiconductor or metalloid element. An amount of the second particles may be, with respect to a total weight of the mixture, about 8 wt% to about 60 wt%, about 10 wt% to about 50 wt%, about 15 wt% to about 40 wt%, or about 20 wt% to about 30 wt%. As the amount of the second particles is in the range recited above, for example, cycle characteristics of the all-solid secondary battery 1 may be further improved.

The first negative active material layer 22 may include, for example, a binder. The binder may be, for example, a styrene-butadiene rubber (SBR), polytetrafluoroethylene (PTFE), a poly(vinylidene fluoride) (PVDF), a polyethylene, a vinylidene fluoride/hexafluoropropylene copolymer, a poly(acrylonitrile), a poly(methyl (meth)acrylate), or the like, but embodiments are not limited thereto, and any suitable binder used in the art may be used. The binder may be composed of one binder or multiple different binders.

As the first negative active material layer 22 may include a binder, the first negative active material layer 22 may be stabilized on the negative current collector 21. In addition, in the charge/discharge processes, despite a volume change and/or a change of relative positions of the first negative active material layer 22, cracking of the first negative active material layer 22 may be suppressed. For example, when the first negative active material layer 22 does not include a binder, it may be possible to easily separate the first negative active material layer 22 from the negative current collector 21. The portion where the first negative active material layer 22 is separated from the negative current collector 21 increases the possibility of a short circuit as the negative current collector 21 is exposed and contacts the solid electrolyte layer 30. The first negative active material layer 22 may be prepared by, for example, applying a slurry in which materials that make up the first negative active material layer 22 are dispersed, on the negative current collector 21, and by drying the same. By including a binder in the first negative active material layer 22, the negative active material in the slurry may be dispersed in a stable manner. For instance, when the slurry is applied on the negative current collector 21 by a screen-printing method, it may be possible to suppress clogging of the screen (for example, clogging by agglomerates of the negative active material).

A thickness of the first negative active material layer may be, for example, about 50% or less, about 40% or less, about 30% or less, about 20% or less, about 10% or less, or about 5% or less of a thickness of the positive active material layer. The thickness of the first negative active material layer may be, for example, about 1 $\mu$m to about 20 $\mu$m, about 2 $\mu$m to about 10 $\mu$m, or about 3 $\mu$m to about 7 $\mu$m. When the thickness of the first negative active material layer is excessively decreased, lithium dendrites formed between the first negative active material layer 22 and the negative current collector 21 may collapse the first negative active material layer 22, and it may be difficult to improve cycle characteristics of the all-solid secondary battery 1. When the thickness of the first negative active material layer is excessively increased, energy density of the all-solid secondary battery 1 is lowered, and internal resistance of the all-solid secondary battery 1 is increased by the first negative active material layer 22, and it may be difficult to be improve cycle characteristics of the all-solid secondary battery 1.

An amount of the binder included in the negative electrode may be, for example, about 0.1 wt% to about 10 wt%, or about 0.1 wt% to about 5 wt% of a total weight of the negative active material layer. An amount of the conductive agent included in the negative electrode may be, for example, about 0.1 wt% to about 10 wt%, or about 0.1 wt% to about 5 wt% of the total weight of the negative active material layer. An amount of the negative active material included in the negative electrode may be about 90 wt% to about 99 wt%, or about 95 wt% to about 99 wt% of the total weight of the negative active material layer. When the negative active material is lithium metal, the negative electrode may not include a binder and a conductive agent.

A negative current collector may be composed of, for example, a material that does not react with lithium, that is, that does not form an alloy or a compound with lithium. The material constituting the negative current collector may be, for example, copper, stainless steel, titanium, iron, cobalt, nickel, or the like, but embodiments are not limited thereto, and all used as an electrode current collector in the art may be used. The negative current collector may consist of one the above-described metals, an alloy of two or more metals, or a coating material. The negative current collector may be, for example, in a plate-like or foil shape.

The negative current collector may include, for example, a base film and a metal layer arranged on one surface or both surfaces of the base film. The base film may include, for example, a polymer. The polymer may include, for example, polyethylene terephthalate (PET), polyethylene (PE), polypropylene (PP), poly(butylene terephthalate) (PBT), polyimide (PI), or a combination thereof. The metal layer may include, for example, indium, copper, magnesium, stainless steel, titanium, iron, cobalt, nickel, zinc , aluminum, germanium, lithium, a combination thereof, or an alloy thereof. When the negative current collector has such a structure, a weight of the electrode may be reduced and, as a result, energy density of the lithium battery may be improved.

The first negative active material layer 22 may further include a suitable additive used for an all-solid secondary battery in the art, such as a filler, a dispersant, an ion-conductive agent, or the like.

Turning now to FIG. 5, in one or mor embodiments, the all-solid secondary battery 100 may further include, for example, a thin film 24 including an element capable of forming an alloy with lithium, that is arranged on the negative current collector 21. The thin film 24 may be arranged between the negative current collector 21 and the first negative active material layer 22. The thin film 24 may include, for example, an element capable of forming an alloy with lithium. The element capable of forming an alloy with lithium may include, for example, gold, silver, zinc, tin, indium, silicon, aluminum, bismuth, or the like, but embodiments are not limited thereto, and all elements capable of forming an alloy with lithium may be used. The thin film 24 may be composed of one of these elements, or may be composed of an alloy of various kinds of metals and metalloids. As the thin film 24 may be arranged on the negative current collector 21, for example, a precipitation shape of a second negative active material layer 23 precipitated between the thin film 24 and the first negative active material layer 22 may become more flattened, and cycle characteristic of the all solid secondary battery 100 may be further improved.

A thickness of the thin film 24 may be, for example, about 1 nm to about 800 nm, about 10 nm to about 700 nm, about 50 nm to about 600 nm, or about 100 nm to about 500 nm. When the thickness of the thin film 24 is less than 1 nm, it may be difficult for the thin film 24 to function. When the thickness of the thin film 24 is too increased, the thin film 24 itself occludes lithium and an amount of precipitated lithium at the negative electrode is decreased, thereby reducing energy density of the all-solid battery, and cycle characteristic of the all-solid secondary battery 1 may be declined. The thin film 24 may be arranged on the negative current collector 21 by, for example, a vacuum deposition method, a sputtering method, a plating method, or the like, but the method is not limited thereto, and all methods used to form a thin film in the art may be used.

The all-solid secondary battery 1 may further include a second negative active material layer 23 arranged between, for example, the negative current collector 21 and the solid electrolyte layer 30, by charging. The all-solid secondary battery 1 may further include a second negative active material layer arranged between, for example, the negative current collector 21 and the first negative active material layer 22, by charging. Although not shown in the drawings, the all-solid secondary battery 1 may further include a second negative active material layer arranged between, for example, the solid electrolyte layer 30 and the first negative active material layer 22, by charging. Although not shown in the drawings, the all-solid secondary battery 1 may further include a second negative active material layer 23 arranged, for example, inside the first negative active material layer 22, by charging.

The second negative active material layer 23 may be a metal layer including at least one of lithium or a lithium alloy. The metal layer may include lithium or a lithium alloy. Thus, since the second negative active material layer 23 is a metal layer including lithium, it acts as, for example, a lithium reservoir. A lithium alloy may include, for example, an Li-Al alloy, a Li-Sn alloy, a Li-In alloy, a Li-Ag alloy, a Li-Au alloy, a Li-Zn alloy, a Li-Ge alloy, a Li-Si alloy, or the like, but embodiments not limited thereto, and any suitable lithium alloy in the art may be used. The second negative active material layer 23 may consist of one of these alloys or lithium, or may consist of different kinds of alloys.

A thickness of the second negative active material layer is not particularly limited and may be, for example, about 1 $\mu$m to about 1,000 $\mu$m, about 1 $\mu$m to about 500 $\mu$m, about 1 $\mu$m to about 200 $\mu$m, about 1 $\mu$m to about 150 $\mu$m about 1 $\mu$m to about 100 $\mu$m, or about 1 $\mu$m to about 50 $\mu$m. When the thickness of the second negative active material layer 23 is excessively decreased, it may be difficult for the second negative active material 23 to function as a lithium reservoir. When the thickness of the second negative active material layer is excessively increased, mass and volume of the all-solid secondary battery 1 are increased, and cycle characteristics may rather decline. The second negative active material layer 23 may be, for example, a metal foil having a thickness in the stated range.

In an all-solid secondary battery 1, the second negative active material layer 23 may be, for example, arranged between the negative current collector 21 and the first negative active material layer 22, before assembly of the all-solid secondary battery 1, or the second negative active material layer 23 may be precipitated by charging, between the negative current collector 21 and the first negative active material layer 22, after the assembly of the all-solid secondary battery 1.

When the second negative active material layer 23 is arranged between the negative current collector 21 and the first negative active material layer 22 before the assembly of the all-solid secondary battery 1, the second negative active material layer 23, a metal layer including lithium, acts as a lithium reservoir. As a result, cycle characteristic of the all-solid secondary battery 1 including the second negative active material layer 23 are further improved. For example, a lithium foil may be arranged between the negative current collector 21 and the first negative active material layer 22 before the assembly of the all-solid secondary battery 1.

When the second negative active material layer 23 is arranged after the assembly of the all-solid secondary battery, the energy density of the all-solid secondary battery 1 may increase because the second negative active material layer 23 is not included at the time of the assembly of the all-solid secondary battery 1. For example, when the all-solid secondary battery 1 is charged, the battery is charged beyond charge capacity of the first negative active material layer 22. That is, the first negative active material layer 22 may be overcharged. At an initial stage of the charging, lithium is occluded in the first negative active material layer 22. That is, the negative active material included in the first negative active material layer 22 forms an alloy or a compound with lithium ions that are derived from the positive electrode 10. When the first negative active material layer 22 is charged beyond its capacity, for example, at a back surface of the first negative active material layer 22, in other words, between the negative current collector 21 and the first negative active material layer 22, lithium is precipitated, and a metal layer corresponding to the second negative active material layer 23 is formed by the precipitated lithium. The second negative active material layer 23 is a metal layer mainly consisting of lithium (that is, lithium metal). These results are obtained when, for example, the negative active material included in the first negative active material layer 22 is composed of a substance that forms an alloy or a compound with lithium. During discharging, lithium in the first negative active material layer 22 and the second negative active material layer 23, that is, lithium in the metal layer, may be ionized and moves in the direction of the positive electrode 10. Therefore, it is possible to use lithium as a negative active material in the all-solid secondary battery 1. In addition, as the first negative active material layer 22 coats the second negative active material layer 23, the first negative active material layer functions as a protection layer of the second negative active material layer 23, that is, the metal layer, and at the same time, suppresses precipitation growth of lithium dendrites. Therefore, a short circuit occurrence and capacity deterioration of the all-solid secondary battery may be suppressed, and as a result, the cycle characteristic of the all-solid secondary battery may be improved. In addition, when the second negative active material layer 23 is arranged by charging after the assembly of the all-solid secondary battery 1, the negative current collector 21, the first negative active material layer 22, and the region therebetween may be, for example, Li-free regions where lithium (Li) metal or a lithium (Li) alloy is not included, in an initial state or in a post-discharge state.

The all-solid secondary battery 1 may have a structure in which the second negative active material layer 23 is arranged on the negative current collector 21, and the solid electrolyte layer 30 is directly arranged on the second negative active material layer 23. The second negative active material layer 23 is, for example, a lithium metal layer or a lithium alloy layer.

When the solid electrolyte layer 30 includes the above-described sulfide-containing solid electrolyte, side reactions between the second negative active material layer 23, which is a lithium metal layer, and the solid electrolyte layer 30 may be suppressed, and thus, cycle characteristics of the all-solid secondary battery 1 may be improved.

Solid electrolyte

A solid electrolyte layer 30 may contain an oxide-containing solid electrolyte, a sulfide-containing solid electrolyte, a polymer electrolyte, or a combination thereof.

The solid electrolyte layer 30 may include, for example, a binder. As the binder included in the solid electrolyte layer 30, for example, at least one of a styrene-butadiene-styrene copolymer, a (meth)acrylic resin, a styrene-butadiene rubber (SBR), a polytetrafluoroethylene, a poly(vinylidene fluoride), a polyethylene, a vinylidene fluoride/hexafluoropropylene copolymer, a poly(acrylonitrile), or a poly(methyl (meth)acrylate), but embodiments are not limited thereto, and any suitable binder used in the art may be used. The binder in the solid electrolyte layer 30 may be the same as or different from the binder in the positive active material layer 12 and the first negative active material layer 22.

According to one or more embodiments, the solid electrolyte layer 30 may use a styrene-butadiene-styrene copolymer, a (meth)acrylic resin, or a combination thereof as a binder.

An amount of the binder in the solid electrolyte layer may be about 0.5 parts by weight to about 2.0 parts by weight, with respect to 100 parts by weight of a total weight of the solid electrolyte and the binder combined.

A dispersant may be further added to a composition for forming the solid electrolyte layer. As dispersants, KD14 (Croda), KD9 (Croda), KD13 (Croda), DISPERBYK-180 (BYK), DISPERBYK-192 (BYK), or the like, may be used.

Positive electrode

A positive electrode 10 includes a positive current collector 11 and a positive active material layer 12.

For the positive current collector 11, a plate or foil comprised of indium, copper, magnesium, stainless steel, titanium, iron, cobalt, nickel, zinc, aluminum, germanium, lithium, a combination thereof, or an alloy thereof, may be used. The positive electrode collector 11 may be omitted.

The positive active material layer 12 may include a bimodal positive active material and a bimodal solid electrolyte. The solid electrolyte included in the positive electrode 10 may be similar to or different from the solid electrolyte included in the solid electrolyte layer 30. According to one or more embodiments, the solid electrolyte may contain a sulfide-containing solid electrolyte.

The positive electrode contains the positive active material, and the positive active material may be a compound capable of reversibly absorbing and desorbing lithium ions, and may be for example, at least one of a lithium transition metal oxide having a layered crystal structure, a lithium transition metal oxide having an olivine crystal structure, or a lithium transition metal oxide having a spinel crystal structure. The positive active material may be for example, a lithium transition metal oxide, such as a lithium cobalt oxide (LCO), a lithium nickel oxide, a lithium nickel cobalt oxide, a lithium nickel cobalt aluminum hydroxide (NCA), a lithium nickel cobalt manganese oxide (NCM), a lithium manganate, a lithium iron phosphate, a nickel sulfide, a copper sulfide, a lithium sulfide, an iron oxide, a vanadium oxide, or the like, but embodiments are not limited thereto, and any suitable positive active material used in the art may be used. The positive active material may be composed of one positive active material or a mixture of two or more positive active materials.

The positive active material may be a compound represented by one of $Li_aA_{1-b}B'_bD_2$ (wherein $0.90 \leq a \leq 1$, and $0 \leq b \leq 0.5$); $Li_aE_{1-b}B'_bO_{2-c}D_c$ (wherein $0.90 \leq a \leq 1$, $0 \leq b \leq 0.5$, and $0 \leq c \leq 0.05$); $LiE_{2-b}B'_bO_{4-c}D_c$ (wherein $0 \leq b \leq 0.5$, and $0 \leq c \leq 0.05$); $Li_aNi_{1-b-c}Co_bB'_cD_\alpha$ (wherein $0.90 \leq a \leq 1$, $0 \leq b \leq 0.5$, $0 \leq c \leq 0.05$, and $0 < \alpha \leq 2$); $Li_aNi_{1-b-c}Co_bB'_cO_{2-\alpha}F'_\alpha$ (wherein $0.90 \leq a \leq 1$, $0 \leq b \leq 0.5$, $0 \leq c \leq 0.05$, and $0 < \alpha < 2$); $Li_aNi_{1-b-c}Co_bB_cO_{2-\alpha}F'_2$ (wherein $0.90 \leq a \leq 1$, $0 \leq b \leq 0.5$, $0 \leq c \leq 0.05$, and $0 < \alpha < 2$); $Li_aNi_{1-b-c}Mn_bB'_cD_\alpha$ (wherein $0.90 \leq a \leq 1$, $0 \leq b \leq 0.5$, $0 \leq c \leq 0.05$, and $0 < \alpha \leq 2$); $Li_aNi_{1-b-c}Mn_bB'_cO_{2-\alpha}F'_\alpha$ (wherein $0.90 \leq a \leq 1$, $0 \leq b \leq 0.5$, $0 \leq c \leq 0.05$, and $0 < \alpha < 2$); $Li_aNi_{1-b-c}Mn_bB'_cO_{2-\alpha}F'_2$ (wherein $0.90 \leq a \leq 1$, $0 \leq b \leq 0.5$, $0 \leq c \leq 0.05$, and $0 < \alpha < 2$); $Li_aNi_bE_cG_dO_2$ (wherein $0.90 \leq a \leq 1$, $0 \leq b \leq 0.9$, $0 \leq c \leq 0.5$, and $0.001 \leq d \leq 0.1$); $Li_aNi_bCo_cMn_dGeO_2$ (wherein $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (wherein $0.90 \leq a \leq 1$, and $0.001 \leq b \leq 0.1$); $Li_aCoG_bO_2$ (wherein $0.90 \leq a \leq 1$, and $0.001 \leq b \leq 0.1$); $Li_aMnG_bO_2$ (wherein $0.90 \leq a \leq 1$, and $0.001 \leq b \leq 0.1$); $Li_aMn_2G_bO_4$ (wherein $0.90 \leq a \leq 1$, and $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); or $LiFePO_4$. In such a compound, A may be Ni, Co, Mn, or a combination thereof; B' may be Al, Ni, Co, Mn, Cr, Fe, Mg, Sr, V, a rare earth element, or a combination thereof; D may be O, F, S, P, or a combination thereof; E may be Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof.

A compound to which a coating layer is added on a surface may be used, and a mixture of the above-described compound and the compound to which a coating layer is added may also be used. The coating layer added on the surface of this compound may include, for example, coating element compounds such as an oxide of the coating element, a hydroxide of the coating element, an oxyhydroxide of the coating element, an oxycarbonate of the coating element, or a hydroxycarbonate of the coating element. The compound that forms such a coating layer may be amorphous or crystalline. The coating element included in the coating layer may be Mg, Al, Co, K, Na, Ca, Si, Ti, V, Sn, Ge, Ga, B, As, Zr, or a combination thereof. A method of forming a coating layer may be selected within the range that the method does not adversely affect the physical properties of the positive active material. The coating method may be, for example, a spray coating method, an immersion method, or the like. Specific coating methods may be well understood by those skilled in the art, and a detailed description is omitted.

The positive active material includes, for example, a lithium salt of a transition metal oxide which has a layered rock salt type structure among the above-described lithium transition metal oxides. "Layered rock salt type structure" is for example, a structure where oxygen atom layers and metal atom layers are alternately arranged in the direction of <111 > of a cubic rock salt type structure, and thereby, each atom layer forms a two-dimensional plane. "Cubic rock salt type structure" is a structure of a sodium chloride (NaCl) type, which is a kind of a crystal structure, and specifically, face centered cubic (fcc) lattices each formed by positive ions and negative ions are displaced from each other by 1/2 of a ridge of the unit lattice. A lithium transition metal oxide having such a layered rock salt type structure may be, for example, a three-element lithium transition metal oxide such as $LiNi_xCo_yAl_zO_2$ (NCA), or $LiNi_xCo_yMn_zO_2$ (NCM) ($0 < x < 1$, $0 < y < 1$, $0 < z < 1$, and $x + y + z = 1$), or the like. When a positive active material includes a three-element lithium transition metal oxide having a layered rock salt type structure, energy density and thermal stability of the all-solid secondary battery 1 are further improved.

The positive active material may be covered by a coating layer as described herein. The coating layer may be any suitable coating layer for a positive active material of an all-solid secondary battery. The coating layer may be, for example, $Li_2O$-$ZrO_2$.

When the positive active material is, for example, a three-element lithium transition metal oxide such as NCA or NCM and contains nickel (Ni), it is possible to decrease metal elution of the positive active material in a charging state and increase capacity density of the all-solid secondary battery 1. As a result, cycle characteristics of an all-solid secondary battery 1 are improved.

A shape of the positive active material may be, for example, a particle shape such as a true sphere, an elliptical sphere, or the like. A particle diameter of the positive active material is not particularly limited and may be in a range applicable to a positive active material of an all-solid secondary battery in the art. A content of the positive active material in the positive electrode 10 is not particularly limited, and may be in a range applicable to a positive electrode of an all-solid secondary battery in the art.

The positive electrode 10 may further include additives such as a conductive agent, a binder, a filler, a dispersant, an ion conductive supplement, or the like, in addition to the positive active material, and the solid electrolyte described herein. The conductive agent may be, for example, graphite, carbon black, acetylene black, Ketjen black, carbon fiber, metal powder, a combination thereof, or the like. The binder may be, for example, a styrene butadiene rubber (SBR), a polytetrafluoroethylene, a poly(vinylidene fluoride), a polyethylene, a combination thereof, or the like. As the filler, a dispersant, an ion conductive supplement, a combination thereof, or the like, that may be added in the positive electrode 10, any suitable material used in an electrode of an all-solid secondary battery may be used.

A method of preparing an all-solid secondary battery may be accomplished by stacking a solid electrolyte layer 30 on top of a positive electrode 10 and stacking a negative electrode 20 on top of the solid electrolyte layer 30, but embodiments are not limited thereto.

According to another embodiment, the solid electrolyte layer 30 may be prepared by coating a composition for forming a solid electrolyte layer on a separate substrate, drying, and separating from the substrate, or the solid electrolyte layer may be prepared in a form of a sheet including the substrate. For the substrate, as nonlimiting examples, a polyethylene terephthalate) film, or a polyethylene nonwoven fabric, a combination thereof, or the like, may be used.

According to another embodiment, the solid electrolyte layer 30 may be formed by coating and drying or transferring a composition for form ing a solid electrolyte layer on the positive electrode 10. For the solid electrolyte 30, a solid electrolyte in a form of a sheet may be used.

Subsequently, an all-solid battery may be manufactured by packing the positive electrode, the solid electrolyte layer, and the negative electrode with a packaging material, and then pressurizing. The pressurizing may be performed by using roll pressing, hot pressing, warm isostatic pressing, or the like. Warm isostatic pressing may be performed at a temperature of about 85°C and a pressure of about 490 megapascal (MPa) for about 30 minutes, but embodiments are not limited thereto.

Mass production may be possible by using roll pressing or hot pressing when pressurizing, and a close interface may be formed during a compression process of the electrode layer and the solid electrolyte layer.

Preparation of negative electrode

A slurry may be prepared by adding a negative active material, a conductive agent, a binder, a solid electrolyte, or the like, which are materials constituting a first negative active material layer 22, to a polar solvent or a non-polar solvent. The prepared slurry may be applied on a negative current collector 21 and dried to prepare a first laminate. Subsequently, a negative electrode 20 may be prepared by pressurizing the dried first laminate. The pressurizing may use, for example, roll pressing, flat pressing, or the like, but embodiments are not limited thereto, and any suitable pressurizing method used in the art may be used. It is possible to omit the pressurizing.

Preparation of positive electrode

A slurry may be prepared by adding a bimodal positive active material, a conductive agent, a binder, a bimodal solid electrolyte, or the like, which are materials constituting the positive active material layer 12, to a non-polar solvent. The prepared slurry may be applied on the positive current collector 11 and dried. The obtained laminate may be pressurized to prepare a positive electrode 10. The pressurizing may use, for example, roll pressing, flat pressing, isotactic pressing, or the like, but embodiments are not limited thereto, and any suitable pressurizing method used in the art may be used. The pressurization process may be omitted. Alternatively, the positive electrode 10 may be prepared by compacting into a form of a pellet, or stretching (molding) into a form of a sheet, a mixture of materials constituting the positive active material layer 12. When the positive electrode 10 is prepared in this way, the positive current collector 11 may be omitted.

For the positive current collector, a plate or foil comprising indium, copper, magnesium, stainless steel, titanium, iron, cobalt, nickel, zinc, aluminum, germanium, lithium, a combination thereof, or an alloy thereof, may be used. The positive electrode collector may be omitted. A thickness of the positive current collector may be, for example, about 1 $\mu$m to about 100 $\mu$m, about 1 $\mu$m to about 50 $\mu$m, about 5 $\mu$m to about 25 $\mu$m, or about 10 $\mu$m to about 20 $\mu$m.

The positive current collector may include, for example, a base film and a metal layer arranged on one surface or both surfaces of the base film. The base film may include, for example, a polymer. The polymer may include, for example, poly(ethylene terephthalate) (PET), a polyethylene (PE), a polypropylene (PP), a poly(butylene terephthalate) (PBT), a polyimide (PI), or a combination thereof. The metal layer may include, for example, indium, copper, magnesium, stainless steel, titanium, iron, cobalt, nickel, zinc, aluminum, germanium, lithium, a combination thereof, or an alloy thereof. When the positive current collector has such a structure, weight of the electrode may be reduced and, as a result, the energy density of the lithium battery may be improved.

Preparation of solid electrolyte layer

The solid electrolyte layer 30 may comprise, for example, a solid electrolyte formed of a sulfide-containing solid electrolyte material. The solid electrolyte layer 30 may be prepared, for example, by mixing and applying a sulfide-containing solid electrolyte, a solvent, and a binder, and then drying, and pressurizing. Alternatively, the sulfide-containing solid electrolyte obtained by the above-described sulfide-containing solid electrolyte preparation method may be deposited by using a known film formation method such as, for example, an aerosol deposition method, a cold spray method, and a sputtering method to prepare a solid electrolyte layer 30. Alternatively, the solid electrolyte layer 30 may be prepared by pressurizing a simple substance of solid electrolyte particles.

Preparation of all-solid secondary battery

A method of preparing an all-solid secondary battery according to one or more embodiments includes providing a positive electrode containing a first positive active material (i.e., a large-diameter positive active material), a second positive active material (i.e., a small-diameter positive active material), a first solid electrolyte, and a second solid electrolyte; providing a negative electrode; preparing a solid electrolyte; and arranging the positive electrode, solid electrolyte, and negative electrode.

The providing of a positive electrode containing a first positive active material (i.e., a large-diameter positive active material), a second positive active material (i.e., a small-diameter positive active material), a first solid electrolyte, and a second solid electrolyte may include obtaining a first mixture by mixing a first positive active material (i.e., a large-diameter positive active material), a second positive active material (i.e., a small-diameter positive active material), and a first solid electrolyte together; obtaining a second mixture by mixing together the first positive active material, the second positive active material, and the second solid electrolyte; mixing the second mixture with the first mixture, and adding and mixing a conductive agent, a binder, and a solvent thereto.

The process may be carried out in a wet manner, but it is also possible to prepare the all-solid secondary battery in a dry manner.

After arranging the above-described positive electrode, solid electrolyte, and negative electrode, pressurization may be performed to prepare an all-solid secondary battery.

The pressurization may be performed at a temperature of, for example, room temperature to about 90°C or less, or about 20°C to about 90°C. Alternatively, the pressurizing may be performed at a high temperature of 100°C or greater. The time for which pressure is applied may be, for example, about 30 minutes or less, about 20 minutes or less, about 15 minutes or less, or about 10 minutes or less. The time for which pressure is applied may be, for example, about 1 millisecond (ms) to about 30 minutes, about 1 ms to about 20 minutes, about 1 ms to about 15 minutes, or about 1 ms to about 10 minutes. The pressurizing method may be, for example, isotactic pressing, roll pressing, flat pressing, or the like, but embodiments are not limited thereto, and any suitable pressurizing method used in the art may be used. A pressure applied during pressurization may be, for example, about 500 MPa or less, about 450 MPa or less, about 350 MPa or less, about 300 MPa or less, about 200 MPa or less, about 150 MPa or less, or about 100 MPa or less. The pressure applied during pressurization may be, for example, about 50 MPa to about 500 MPa, about 50 MPa to about 300 MPa, about 50 MPa to about 150 MPa, or about 50 MPa to about 100 MPa. By this pressurizing, for example, a solid electrolyte powder is sintered to form a solid electrolyte layer.

The configuration and production method of an all-solid secondary battery described herein is an example of one or more embodiments, and constituent members and production procedures may be appropriately changed.

Hereinafter, exemplary embodiments will be described in further detail with reference to examples and comparative examples, but embodiments are not limited to the following examples.

EXAMPLES

Preparation of positive active material

Preparation Example 1: $LiNi_{0.8}Co_{0.15}Al_{0.05}O_2$ (NCA) having coating film of $aLi_2O\text{-}ZrO_2$ (D50 = 14 $\mu$m)

A positive active material having a coating film of $aLi_2O\text{-}ZrO_2$ was prepared according to the following method.

A mixed solution of lithium methoxide, zirconium propoxide, ethanol, and ethyl acetoacetate were mixed and stirred for 30 minutes, to prepare an alcohol solution of $aLi_2O\text{-}ZrO_2$ (a=1) (coating solution for coating $aLi_2O\text{-}ZrO_2$). Here, the amounts of lithium methoxide and zirconium propoxide were adjusted so that a content of $aLi_2O\text{-}ZrO_2$ (a=1) coated on a surface of the positive active material was 0.5 mol% based on the 100 mol% of the total amount of the positive active material.

Next, the coating solution for coating $aLi_2O\text{-}ZrO_2$ was mixed with a fine powder of a positive active material $LiNi_{0.8}Co_{0.15}Al_{0.05}O_2$ (NCA) (D50 =14 $\mu$m), and the mixed solution was heated to about 40°C while stirring, to evaporate and dry solvents such as alcohol. Here, ultrasonic waves were transmitted to the mixed solution.

By performing the above process, a precursor of $aLi_2O\text{-}ZrO_2$ was coated on particle surfaces of the fine powder of the positive active material.

In addition, the precursor of $aLi_2O\text{-}ZrO_2$ (a=1) coated on the particle surfaces of the positive active material was heat-treated at about 350°C for 1 hour under an oxygen atmosphere. In this heat-treatment process, the precursor of $aLi_2O\text{-}ZrO_2$ (a=1) present on the positive active material was changed to $aLi_2O\text{-}ZrO_2$ (a=1). A content of $aLi_2O\text{-}ZrO_2$ (LZO) was about 0.4 parts by weight, with respect to 100 parts by weight of NCA.

According to the preparation process described above, $LiNi_{0.8}Co_{0.15}Al_{0.05}O_2$ (NCA)(D50 =14 $\mu$m) having an $aLi_2O\text{-}ZrO_2$ coating film was obtained. In $aLi_2O\text{-}ZrO_2$, a is 1.

Preparation Example 2: $LiNi_{0.8}Co_{0.15}Al_{0.05}O_2$ (NCA) (D50 = 5 $\mu$m) having coating film of $aLi_2O$-$ZrO_2$

Except for using a positive active material $LiNi_{0.8}Co_{0.15}Al_{0.05}O_2$ (NCA) (D50 =5 $\mu$m) instead of $LiNi_{0.8}Co_{0.15}Al_{0.05}O_2$ (NCA) (D50=14 $\mu$m), similar procedures were carried as in Preparation Example 1, to prepare $LiNi_{0.8}Co_{0.15}Al_{0.05}O_2$ (NCA) (D50 =5 $\mu$m) having a coating film of $aLi_2O$-$ZrO_2$.

Preparation of sulfide-containing solid electrolyte

In the following Preparation Examples, A represents $Li_6PS_5Cl_{1.25}$, Cu represents $Li_{5.72}Cu_{0.03}PS_{4.75}Cl_{1.25}$, CuZn represents $(Li_{5.72}Cu_{0.03})(P_{0.985}Zn_{0.015})S_{4.75}Cl_{1.25}$, and $CuSO_4$ represents $Li_{5.72}Cu_{0.03}PS_{4.725}(SO_4)_{0.025}Cl_{1.25}$.

Preparation Example 3: Small-diameter solid electrolyte $Li_6PS_5Cl_{1.25}$ (A) (D50 =0.8 $\mu$m)

A small-diameter solid electrolyte obtained from Mitsui was used.

Preparation Example 4: Large-diameter solid electrolyte A (D50 = 2.0 $\mu$m)

A large-diameter solid electrolyte obtained from Mitsui was used.

Preparation Example 5: Large-diameter solid electrolyte $(Li_{5.72}Cu_{0.03})(P_{0.985}Zn_{0.015})S_{4.75}Cl_{1.25}$ (hereinafter, CuZn) (D50 = 2.1 $\mu$m)

In a glove box under an Ar atmosphere, a lithium precursor ($Li_2S$), a phosphorus precursor ($P_2S_5$), a zinc precursor (ZnS), a chlorine precursor (LiCl), and a copper precursor ($Cu_2S$) were combined in a stoichiometric ratio to obtain a desired composition of $(Li_{5.72}Cu_{0.03})(P_{0.985}Zn_{0.015})S_{4.75}Cl_{1.2}$, to obtain a mixture of precursors.

The obtained mixture was pressed with a uniaxial pressure to prepare pellets having a thickness of about 10 mm and a diameter of about 13 mm. After covering the prepared pellets with a gold foil, the pellets were placed in a carbon crucible and the carbon crucible was vacuum-sealed by using a quartz glass tube. The vacuum-sealed pellets were subjected to a first heat treatment by using an electric furnace at 300°C for 12 hours at a rate of 1.0°C/min, and a second heat treatment was performed at 475°C for 18 hours at a rate of 1.0°C/min. Then, the pellets were cooled to room temperature at a rate of 1.0°C/min.

The product obtained after cooling was ball milled at about 300 revolutions per minute (rpm) for 24 hours to perform a grinding process, and then the grinding resultant was dried in a vacuum at 80°C for 24 hours to prepare a large-diameter sulfide-containing solid electrolyte $(Li_{5.72}Cu_{0.03})(P_{0.985}Zn_{0.015})S_{4.75}Cl_{1.25}$ having a D50 particle diameter of about 2.1 $\mu$m.

Preparation Example 6: Large-diameter solid electrolyte $Li_{5.72}Cu_{0.03}PS_{4.75}Cl_{1.25}$ (hereinafter referred to as Cu) (D50 = 3.5 $\mu$m)

$Li_2S$ as a lithium precursor, $P_2S_5$ as a phosphorus precursor, LiCl as a chlorine precursor, and $Cu_2S$ as a copper precursor were individually prepared.

The above-mentioned precursors were individually prepared by wet grinding. 10 grams (g) of the precursor, 30 milliliters (mL) of a xylene solvent, and 100 g of zirconia balls ($ZrO_2$ balls) were put into an 80 mL container, and wet ball milling was performed at a speed of 800 rpm for 2 hours. Removal of the xylene solvent was performed by vacuum-drying at 120°C for 36 hours, and the pulverized precursor was stored in an inert atmosphere. Agglomeration of the pulverized particles was prevented by wet grinding.

The individually prepared precursor particles were mixed in a stoichiometric ratio to obtain a desired composition $Li_{5.72}Cu_{0.03}PS_{4.75}Cl_{1.25}$, to prepare a mixture of precursors.

Mixing of the precursor particles was performed by using a dry mixer. Agglomeration and mechano-chemical reaction of the precursor particles were prevented by mixing by using a dry mixer. In the dry-mixing process, individual precursors were mixed based on 10 g of the desired composition and high-speed mixing was performed at 25,000 rpm for 5 minutes (cycles of rotation for 10 seconds and rest for 10 seconds were repeated).

The prepared precursor mixture powder was put into a carbon crucible and the carbon crucible was sealed in an argon atmosphere by using a quartz glass tube. The argon-sealed precursor mixture was heated from room temperature to 450°C at a rate of 1.0°C/min by using an electric furnace, heat-treated at 450°C for 18 hours, cooled to room temperature at a rate of 1.0°C/min, and dried at 80°C in vacuum, and thus, a solid ion conductor compound was prepared. A composition of the prepared solid ion conductor compound was $Li_{5.72}Cu_{0.03}PS_{4.75}Cl_{1.25}$.

Preparation Example 7: Large-diameter solid electrolyte A (D50 = 3.0 $\mu$m)

A large-diameter solid electrolyte obtained from Mitsui was used.

Preparation Example 8: Small-diameter solid electrolyte $Li_{5.72}Cu_{0.03}PS_{4.725}(SO_4)_{0.025}Cl_{1.25}(CuSO_4)$ (D50 = 1.8 $\mu$m)

In a glove box under an Ar atmosphere, a lithium precursor ($Li_2S$), a phosphorus precursor ($P_2S_5$), a chlorine precursor (LiCl), a copper precursor ($Cu_2S$), and lithium sulfate ($Li_2SO_4$) were combined in a stoichiometric ratio to obtain a desired composition of $Li_{5.72}Cu_{0.03}PS_{4.725}(SO_4)_{0.025}Cl_{1.25}$, to obtain a mixture of precursors.

The obtained mixture was pressed with a uniaxial pressure to prepare pellets having a thickness of about 10 millimeters (mm) and a diameter of about 13 mm. After covering the prepared pellets with a gold foil, the pellets were placed in a carbon crucible and the carbon crucible was vacuum-sealed by using a quartz glass tube. The vacuum-sealed pellets were subjected to a first heat treatment by using an electric furnace at 300°C for 12 hours at a rate of 1.0°C/min, and a second heat treatment was performed at 475°C for 24 hours at a rate of 1.0°C/min. Then, the pellets were cooled to room temperature at a rate of 1.0°C/min.

The product obtained after cooling was ball milled at about 300 rpm for 24 hours to perform a grinding process, and then dried in a vacuum at 80°C for 24 hours to prepare a small-diameter sulfide-containing solid electrolyte $Li_{5.72}Cu_{0.03}PS_{4.725}(SO_4)_{0.025}Cl_{1.25}$ having an D50 particle diameter of about 1.8 $\mu$m.

Preparation Example 9: Large-diameter solid electrolyte CuZn (D50 = 3.0 $\mu$m)

A large-diameter solid electrolyte CuZn (D50 = 3.0 $\mu$m) was prepared in a similar manner as in Preparation Example 5, except that the ball milling process was not performed.

Preparation of all-solid secondary battery

Example 1: A (0.8 $\mu$m) / A (2.0 $\mu$m) (8:2)

6 g of the total weight of the large-diameter positive active material NCA (D50 = 14 $\mu$m) obtained in Preparation Example 1 and the second positive active material (i.e., the small-diameter positive active material) NCA (D50 = 5 $\mu$m) obtained in Preparation Example 2 in a 4:1 mixing weight ratio, and 1.12 g of the small diameter solid electrolyte A (D50 = 0.8 $\mu$m) obtained in Preparation Example 3 were mixed with a blender to prepare a first mixture.

In addition, 2.5 g of the total weight of the large-diameter positive active material NCA (D50 = 14 $\mu$m) obtained in Preparation Example 1 and the second positive active material (i.e., the small-diameter positive active material) NCA (D50 = 5 $\mu$m) obtained in Preparation Example 2, and 0.28 g of the large-diameter solid electrolyte A (D50 = 2.0 $\mu$m) obtained in Preparation Example 4 were mixed with a blender to prepare a second mixture.

The first mixture and the second mixture were mixed, and then, carbon nanotubes (CNT) as a conductive agent and polytetrafluoroethylene (PTFE) as a binder were added to thereto, and mixed. A xylene solvent was added to the mixed particles to prepare the a positive electrode composition in a form of a dough, and then the positive electrode composition was stretched and molded into a sheet from by using a dry kneading method to a thickness of about 150 $\mu$m to prepare a positive electrode sheet. Subsequently, vacuum drying was performed at 45°C for 2 hours.

A mixing weight ratio of the large-diameter positive active material and the second positive active material (i.e., the small-diameter positive active material) was 4:1, and a mixing weight ratio of the positive active material, conductive agent, binder, and solid electrolyte was 85:0.4:0.6:14. In the positive electrode composition, a mixing weight ratio of the small-diameter solid electrolyte A (D50 = 0.8 $\mu$m) obtained in Preparation Example 3 and the large-diameter solid electrolyte A (D50 = 2.0 $\mu$m) obtained in Preparation Example 4 was 8:2, and the small-diameter solid electrolyte A (D50 = 0.8 $\mu$m) and the large-diameter solid electrolyte A (D50 = 2.0 $\mu$m) were used as the electrolyte for a positive electrode.

The positive electrode sheet was pressed onto a positive current collector of an aluminum foil having a thickness of 18 $\mu$m, placed in a batch-type oil chamber, and subjected to a warm isostatic pressing process in which a pressure of 490 mPa was applied, to form a compressed positive electrode.

Separately, an SUS foil (thickness =10 $\mu$m) was prepared as a negative current collector. A negative active material was prepared by mixing silver particles (primary particle diameter: 60 nm) and a carbon black powder (primary particle diameter: 35 nm) at a weight ratio of 25:75. A slurry for forming a negative electrode was prepared by placing in a container, 7 wt% of a poly(vinylidene fluoride) binder (# 9300, Kureha Co.) with the silver particles (primary particle diameter: 60 nm) and the carbon black powder (primary particle diameter = 35 nm) in N-methyl pyrrolidone (NMP) and stirring. The slurry for forming the negative electrode was applied to the SUS foil by using a blade coater, and dried in air at 80°C for 20 minutes and vacuum dried at 100°C for 12 hours to prepare a negative electrode.

A solid electrolyte $Li_{5.75}PS_{4.75}Cl_{1.25}$ (D50= 3 $\mu$m) and an acrylic resin (manufactured by Xeon) as a binder and were mixed in a weight ratio of 98.5:1.5 to prepare a mixture. Isobutyl isobutyrate (IBIB) as a solvent was added to the mixture to prepare a composition for forming a solid electrolyte.

The composition for forming the solid electrolyte layer was placed on a polyethylene nonwoven fabric, and two blades with different gaps were moved, and the composition was dried in the air at 25°C for 12 hours and vacuum dried at 70°C for 2 hours in the air in a dry room, and thus, a solid electrolyte in a form of a sheet was formed on a polyethylene nonwoven fabric.

The positive electrode obtained according to the above process, a polyethylene nonwoven fabric, a solid electrolyte, and a negative electrode were sequentially laminated and subjected to a warm isostatic pressing at 85°C and a pressure of 500 MPa for about 30 minutes to manufacture an all-solid secondary battery. In the all-solid-state battery, a thickness of the solid electrolyte after pressurization was 45 $\mu$m.

Example 2: A (0.8 $\mu$m) / CuZn (2.1 $\mu$m) (8:2)

A solid electrolyte and an all-solid secondary battery employing the same were prepared in a similar manner as in Example 1, except that the small-diameter solid electrolyte A (D50 = 0.8 $\mu$m) obtained in Preparation Example 3 and the large-diameter solid electrolyte CuZn (D50 = 2.1 $\mu$m) obtained in Preparation Example 5 were used instead of the small-diameter solid electrolyte A (D50 = 0.8 $\mu$m) obtained in Preparation Example 3 and the large-diameter solid electrolyte A (D50 = 2.0 $\mu$m) obtained in Preparation Example 4, when preparing a composition for forming a solid electrolyte.

Example 3: CuSO$_4$(1.8 $\mu$m) / Cu(3.5 $\mu$m) (8:2)

A solid electrolyte and an all-solid secondary battery employing the same were prepared in a similar manner as in Example 1, except that the small-diameter solid electrolyte CuSO$_4$ (D50 = 1.8 $\mu$m) obtained in Preparation Example 8 and the large-diameter solid electrolyte Cu (D50 = 3.5 $\mu$m) obtained in Preparation Example 6 were used instead of the small-diameter solid electrolyte A (D50 = 0.8 $\mu$m) obtained in Preparation Example 3 and the large-diameter solid electrolyte A (D50 = 2.0 $\mu$m) obtained in Preparation Example 4, when preparing a composition for forming a solid electrolyte.

Example 4: A (0.8 $\mu$m) / A(2.0 $\mu$m) (6:4)

A solid electrolyte and an all-solid secondary battery employing the same were prepared in a similar manner as in Example 1, except that the mixing weight ratio of the small-diameter solid electrolyte A (D50 = 0.8 $\mu$m) obtained in Preparation Example 3 and the large-diameter solid electrolyte A (D50 = 2.0 $\mu$m) obtained in Preparation Example 4 was changed to 6:4, when preparing the composition for forming a solid electrolyte.

Example 5: A (0.8 $\mu$m) / A(2.0 $\mu$m) (7:3)

A solid electrolyte and an all-solid secondary battery employing the same were prepared in a similar manner as in Example 1, except that the mixing weight ratio of the small-diameter solid electrolyte A (D50 = 0.8 $\mu$m) obtained in Preparation Example 3 and the large-diameter solid electrolyte A (D50 = 2.0 $\mu$m) obtained in Preparation Example 4 was changed to 7:3, when preparing the composition for forming a solid electrolyte.

Example 6: A (0.8 $\mu$m) / A (3.0 $\mu$m) (8:2)

A solid electrolyte and an all-solid secondary battery employing the same were prepared in a similar manner as in Example 1, except that the small-diameter solid electrolyte A (D50 = 0.8 $\mu$m) obtained in Preparation Example 3 and the large-diameter solid electrolyte A (D50 = 3.0 $\mu$m) obtained in Preparation Example 7 were used instead of the small-diameter solid electrolyte A (D50 = 0.8 $\mu$m) obtained in Preparation Example 3 and the large-diameter solid electrolyte A (D50 = 2.0 $\mu$m) obtained in Preparation Example 4, when preparing a composition for forming a solid electrolyte.

Example 7: A (0.8 $\mu$m) / A (5.0 $\mu$m) (8:2)

A solid electrolyte and an all-solid secondary battery employing the same were prepared in a similar manner as in Example 1, except that the small-diameter solid electrolyte A (D50 = 0.8 $\mu$m) obtained in Preparation Example 3 and the large-diameter solid electrolyte A (D50 = 5.0 $\mu$m) obtained in Preparation Example 7-1 were used instead of the small-diameter solid electrolyte A (D50 = 0.8 $\mu$m) obtained in Preparation Example 3 and the large-diameter solid electrolyte A (D50 = 2.0 $\mu$m) obtained in Preparation Example 4, when preparing a composition for forming a solid electrolyte.

Comparative Example 1: Small-diameter solid electrolyte A (D50 = 0.8 $\mu$m)

A solid electrolyte and an all-solid secondary battery employing the same were prepared in a similar manner as in Example 1, except that the small-diameter solid electrolyte A (D50 = 0.8 $\mu$m) was used instead of the small-diameter solid electrolyte A (D50 = 0.8 $\mu$m) obtained in Example 3 and the large-diameter solid electrolyte A (D50 = 2.0 $\mu$m) obtained in Preparation Example 4, when preparing the composition for forming a solid electrolyte.

Comparative Example 2: Large-diameter solid electrolyte A (D50 = 2.0 $\mu$m)

A solid electrolyte and an all-solid secondary battery employing the same were prepared in a similar manner as in Comparative Example 1, except that the large-diameter solid electrolyte A (D50 = 2.0 $\mu$m) was used instead of the small-diameter solid electrolyte A (D50 = 0.8 $\mu$m), when preparing the composition for forming a solid electrolyte.

Comparative Example 3: Small-diameter solid electrolyte $CuSO_4$ (D50 = 1.8 $\mu$m)

A solid electrolyte and an all-solid secondary battery employing the same were prepared in a similar manner as in Comparative Example 1, except that the small-diameter solid electrolyte $CuSO_4$ (D50 = 1.8 $\mu$m) obtained in Preparation Example 8 was used instead of the small-diameter solid electrolyte A (D50 = 0.8 $\mu$m), when preparing the composition for forming a solid electrolyte.

Comparative Example 4: A (0.8 $\mu$m) / A (2.0 $\mu$m) (3:7)

A solid electrolyte and an all-solid secondary battery employing the same were prepared in a similar manner as in Example 1, except that the mixing weight ratio of the small-diameter solid electrolyte A (D50 = 0.8 $\mu$m) obtained in Preparation Example 3 and the large-diameter solid electrolyte A (D50 = 2.0 $\mu$m) obtained in Preparation Example 4 was changed to 3:7, instead of 8:2, when preparing the composition for forming a solid electrolyte.

Comparative Example 5: A (0.8 $\mu$m) / A (2.0 $\mu$m) (5:5)

A solid electrolyte and an all-solid secondary battery employing the same were prepared in a similar manner as in Example 1, except that the mixing weight ratio of the small-diameter solid electrolyte A (D50 = 0.8 $\mu$m) obtained in Preparation Example 3 and the large-diameter solid electrolyte A (D50 = 2.0 $\mu$m) obtained in Preparation Example 4 was changed to 5:5, instead of 8:2, when preparing the composition for forming a solid electrolyte.

Comparative Example 6

A solid electrolyte and an all-solid secondary battery employing the same were prepared in a similar manner as in Example 1, except that the $(d_1 90 - d_1 10) / d_1 50$ of the small-diameter solid electrolyte A (D50 = 0.8 $\mu$m) obtained in Preparation Example 3 was 2.1, when preparing the composition for forming a solid electrolyte. The small-diameter solid electrolyte A (D50 = 0.8 $\mu$m) with $(d_1 90 - d_1 10) / d_1 50$ of 2.1 obtained from Mitsui was used.

Evaluation Example 1: Measurement of interfacial resistance and grain boundary resistance

After charging the all-solid secondary battery prepared in Example 1 and Comparative Example 1 to state of charge (SOC) of 100 %, impedance of the positive electrode was measured. From the impedance measurement results of the all-solid secondary battery, each of an interfacial resistance component and a grain boundary resistance component constituting an equivalent circuit was calculated. From the results, interfacial resistance between the positive active material and the solid electrolyte ($r_{i/e}$, $\Omega \cdot cm^3$) and grain boundary resistance between solid electrolyte particles ($r_{i,gb}$, $\Omega \cdot cm$) were derived, and the results are shown in Table 1 below.

Impedance was measured using a 2-probe method using an impedance analyzer (Solartron 1400A/1455A impedance analyzer). A range of frequency was 7 megahertz (MHz) to 1 hertz (Hz), and an amplitude voltage was 10 mV. The impedance was measured at 25°C.

Table 1

| Class | Interfacial resistance ($r_{i/e}$) [$\Omega \cdot cm^3$] | Grain boundary resistance ($r_{i,gb}$) [$k\Omega \cdot cm$] |
|---|---|---|
| Example 1 | 0.012 | 1270 |
| Comparative Example 1 | 0.012 | 1350 |

As shown in Table 1, the all-solid secondary battery of Example 1 had reduced grain boundary resistance compared to the all-solid secondary battery of Comparative Example 1.

Evaluation Example 2: Positive electrode density

Densities of the positive electrodes of Examples 1 to 3, 6, and 7, and Comparative Examples 1 to 3 were measured, and the results thereof are shown in Table 2 below.

Table 2

| Class | Solid electrolyte | Positive electrode density (g/cc) |
|---|---|---|
| Comparative Example 1 | A (0.8 $\mu$m) | 3.14 |
| Comparative Example 2 | A (2.0 $\mu$m) | 3.16 |
| Comparative Example 3 | CuSO$_4$ (1.8 $\mu$m) | 3.03 |
| Example 1 | A (0.8 $\mu$m) / A (2.0 $\mu$m) (8:2) | 3.30 |
| Example 2 | A (0.8 $\mu$m) / CuZn (2.1 $\mu$m) (8:2) | 3.29 |
| Example 3 | CuSO$_4$(1.8 $\mu$m) / Cu(3.5 $\mu$m) (8:2) | 3.18 |
| Example 6 | A (0.8 $\mu$m) / A (3.0 $\mu$m) (8:2) | 3.26 |

As shown in Table 2, the positive electrodes of Examples 1 to 3 and 6 contained a positive active material and a bimodal solid electrolyte, and compared to the positive electrodes of Comparative Examples 1 to 3 containing a single solid electrolyte, the pores inside the positive electrode were reduced, and the positive electrode density was found to be increased
Also, it was confirmed that the positive electrode of Example 7 had a similar positive electrode density to that of Example 6.

Evaluation Example 3: Discharge capacity and high-rate characteristics

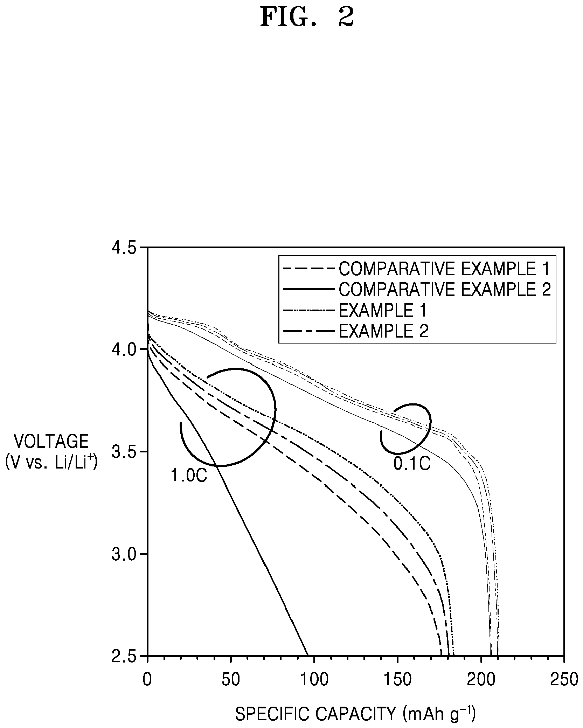

Charge/discharge characteristics of the all-solid secondary battery were evaluated by the following charge/discharge tests. The charge/discharge tests were performed by placing the all-solid secondary battery in a thermostat at 45°C.
For a first cycle, the battery was charged at a constant current of 0.1 C until the battery voltage reached 4.2 V. Subsequently, the battery was discharged at a constant current of 0.1 C until the battery voltage reached 2.5 V. For a second cycle, the battery was charged at a constant current of 0.33 C until the battery voltage reached 4.25 V. Subsequently, the battery was discharged at a constant current of 0.33 C until the battery voltage reached 2.5 V.
For a third cycle, the battery was charged at a constant current of 1.0 C until the battery voltage reached 4.2 V. Subsequently, the battery was discharged at a constant current of 1.0 C until the battery voltage reached 2.5 V.
For each cycle, a 10-minute rest period was placed after the charging and discharging.
Discharge capacity and high-rate characteristics in the charge/discharge processes up to the third cycle are shown in Table 3 and FIG. 2. In Table 3 below, a particle size distribution (Span 1) was ($d_190 - d_110 / d_150$), and a particle size distribution (Span 2) was ($d_290 - d_210$) / $d_250$.

Table 3

| Class | Solid electroly te | Span 1 | Span 2 | 0.1 C Capacity (mAh/g) | 0.33 C Capacity (mAh/g) | 1.0 C Capacity (mAh/g) | 1.0 C / 0.1 C (%) |
|---|---|---|---|---|---|---|---|
| Comparative Example 1 | A (0.8 $\mu$m) | 1.7 | | 206 | 192 | 176 | 85 |
| Comparative Example 2 | A (2.0 $\mu$m) | | 1.8 | 205 | 185 | 96 | 47 |
| Example 1 | A (0.8 ($\mu$m) / A (2.0 $\mu$m) (8:2) | 1.7 | 1.8 | 211 | 198 | 184 | 87 |
| Example 2 | A (0.8 $\mu$m) / CuZn (2.1 $\mu$m) (8:2) | 1.7 | 3.1 | 210 | 196 | 181 | 86 |

As shown in Table 3, reversible capacity increased when the LPSCI (0.8 $\mu$m) / LPSCI (2 $\mu$m) bimodal solid electrolyte of Example 1 was applied compared to when the LPSCI (0.8 $\mu$m) single solid electrolyte of Comparative Example 1 was applied. As shown in not Table 3, cell resistance was reduced when the content of the small-diameter solid electrolyte was higher than that of the large-diameter solid electrolyte, and when the Cu and Zn-substituted LPSCI (2.1 $\mu$m) solid electrolyte of Example 2 was applied, compared to when the single solid electrolyte of Comparative Example 1 or 2 was applied, reversible capacity was also increased.

Evaluation Example 4: Discharge capacity and high-rate characteristics

Charge/discharge characteristics of the all-solid secondary battery were evaluated by the following charge/discharge tests. The charge/discharge tests were performed by placing the all-solid secondary battery in a thermostat at 45°C.

For a first cycle, the battery was charged at a constant current of 0.1 C until the battery voltage reached 4.25 V. Subsequently, the battery was discharged for 12.5 hours at a constant current of 0.1 C until the battery voltage reached 2.5 V.

For a second cycle, the battery was charged at a constant current of 0.33 C until the battery voltage reached 4.25 V. Subsequently, the battery was discharged at a constant current of 0.33 C until the battery voltage reached 2.5 V.

For a third cycle, the battery was charged at a constant current of 1.0 C until the battery voltage reached 4.2 V. Subsequently, the battery was discharged at a constant current of 1.0 C until the battery voltage reached 2.5 V.

For each cycle, a 10-minute rest period was placed after the charging and discharging.

Discharge capacity and high-rate characteristics in the charge/discharge processes up to the third cycle are shown in Table 4.

Table 4

| Class | Solid electrolyte | 0.1 C Capacity (mAh/g) | 0.33 C Capacity (mAh/g) | 1.0 C Capacity (mAh/g) | High-rate characteristics 1.0C/0.1 C (%) |
|---|---|---|---|---|---|
| Comparative Example 3 | Cu,SO$_4$ (1.8 $\mu$m) | 205 | 187 | 117 | 57 |
| Example 3 | Cu,SO$_4$ (1.8 $\mu$m) Cu (3.5 $\mu$m) (8: 2) | 206 | 190 | 148 | 72 |
| Comparative Example 4 | A (0.8 $\mu$m) / A (2.0 $\mu$m) (3:7) | 194 | 176 | 100 | 52 |
| Comparative Example 5 | A (0.8 $\mu$m) /A (2.0 $\mu$m) (5:5) | 204 | 188 | 138 | 68 |

(continued)

| Class | Solid electrolyte | 0.1 C Capacity (mAh/g) | 0.33 C Capacity (mAh/g) | 1.0 C Capacity (mAh/g) | High-rate characteristics 1.0C/0.1 C (%) |
|---|---|---|---|---|---|
| Example 4 | A (0.8 $\mu$m) /A (2.0 $\mu$m) (6:4) | 209 | 195 | 180 | 86 |
| Example 5 | A (0.8 $\mu$m) /A (2.0 $\mu$m) (7:3) | 209 | 196 | 181 | 87 |
| Example 6 | A (0.8 $\mu$m) /A (3.0 $\mu$m) (8:2) | 209 | 194 | 169 | 81 |

As shown in Table 4, it was found that the reversible capacity increased when a ratio of the small particles/large particles of the bimodal solid electrolyte was 6:4 or more. In addition, when $CuSO_4$-substituted LPSCI (1.8 $\mu$m) and Cu-substituted LPSCI (3.5 $\mu$m) bimodal solid electrolytes were applied according to Example 3, the reversible capacity increased compared to when using a single solid electrolyte of Comparative Example 3. However, as the size of the large-diameter solid electrolyte increased, an extent of the capacity increase slightly decreased.

In addition, discharge capacity and high-rate characteristics of the all-solid secondary battery of Comparative Example 6 were evaluated in a similar manner as for the all-solid secondary battery of Comparative Example 5 described above.

As a result of the evaluation, the all-solid secondary battery of Comparative Example 6 exhibited discharge capacity and high-rate characteristics equivalent to those of Comparative Example 5.

Evaluation Example 5: DCIR

DCIR characteristics of the all-solid secondary battery were evaluated by the following charge/discharge tests. The charge/discharge tests were performed by placing the all-solid secondary battery in a thermostat at 25°C.

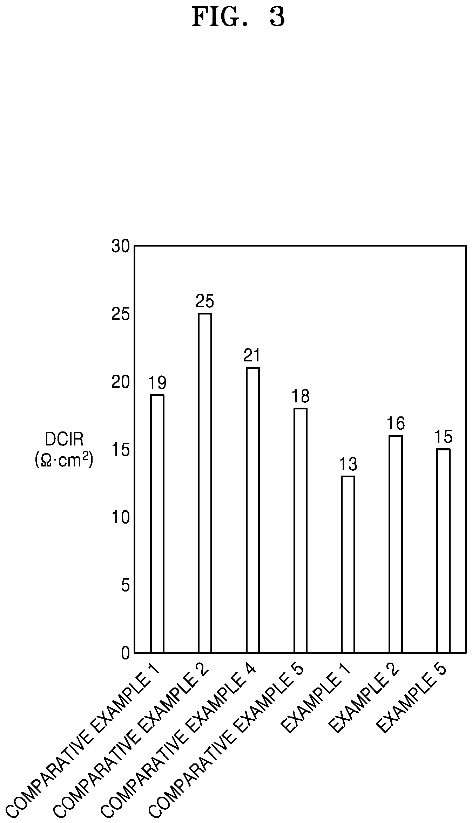

The battery was charged at a current of 0.1 C to SOC 50, and under a condition of SOC 50 (when a total charge capacity of a battery is set as 100 %, SOC 50 is a state of charging to 50 % of the charge capacity, and is a state of discharging to 50 %, in terms of discharging state) the battery was discharged at 0.33 C for 30 seconds. This charging and discharging process was performed repeatedly, a total of 5 times, and $\Delta V/ \Delta I$ for 10 seconds was calculated to evaluate DCIR, and the results are shown in FIG. 3.

Referring to FIG. 3, DCIR (5th cycle measurement) of a cell applying a bimodal solid electrolyte was a value of at least 16 $\Omega \cdot cm^2$.

Evaluation Example 6: Atmospheric stability

Positive electrodes to which a single solid electrolyte and a bimodal solid electrolyte were respectively applied were stored in a dry room for 3 days and then exposed to a dry air, and changes in ionic conductivity and reversible capacity were confirmed. Ionic conductivity retention rates were calculated according to Equation 8 below, and reversible capacity change rates were evaluated according to Equation 9 below. The evaluation results of the ionic conductivity retention rates of the positive electrodes to which the single solid electrolyte and the bimodal solid electrolyte are respectively applied are shown in Table 5 below, and the evaluation results of the reversible capacity change rates are shown in Tables 6 and 7.

Equation 8

Ionic conductivity retention rate = {(ionic conductivity when exposed to dry air for 1 or 3 days) / (ionic conductivity before exposure to dry air)} x 100%

Equation 9

R eversible capacity change rate= {(reversible capacity when exposed to dry air for 3 days)/(reversible capacity before exposure to dry air)} x 100%

Table 5

| Class | D50 ($\mu$m) | Ion conductivity after storage (mS/cm) | | | Ion conductivity retention rate (%) |
|---|---|---|---|---|---|
| Class | D50 ($\mu$m) | Day 0 | Day 1 | Day 3 | |
| LPSCI | 1.0 | 1.5 | 1.1 | 0.8 | 53.3 |
| LPSCI | 3.1 | 2.9 | 2.2 | 1.9 | 65.5 |
| Cu | 1.7 | 3.6 | 2.8 | 2.4 | 66.7 |
| Cu | 4.1 | 5.1 | 4.3 | 4.1 | 80.4 |
| CuZn | 2.1 | 3.1 | 2.4 | 2.1 | 67.7 |
| CuZn | 3.9 | 4.9 | 3.9 | 3.8 | 77.6 |
| CuSi | 1.7 | 2.8 | 2 | 1.9 | 67.9 |
| CuSi | 4.1 | 4.8 | 4.2 | 3.9 | 81.3 |
| CuGe | 1.8 | 2.5 | 1.8 | 1.6 | 64.0 |
| CuGe | 3.9 | 4.7 | 3.8 | 3.5 | 74.5 |
| CuSn | 2.2 | 3.3 | 2.7 | 2.2 | 66.7 |
| CuSn | 3.8 | 4.9 | 4.2 | 3.9 | 79.6 |
| CuSO$_4$ | 1.8 | 2.9 | 2.5 | 1.9 | 66.0 |
| CuSO$_4$ | 4.4 | 4.2 | 3.7 | 3.6 | 85.7 |
| In Table 5,, LPSCI represents Li$_6$PS$_5$Cl$_{1.25}$, Cu represents Li$_{5.72}$Cu$_{0.03}$PS$_{4.75}$Cl$_{1.25}$. | | | | | |

In Table 5, CuSi represents (Li$_{5.72}$Cu$_{0.03}$)(P$_{0.99}$Si$_{0.01}$)S$_{4.75}$Cl$_{1.25}$, and a solid electrolyte was prepared in a similar manner as in Preparation Example 5, except that CuSi having an average particle diameter (D50) of 1.7 $\mu$m, and CuSi having an average particle diameter (D50) of 4.1 $\mu$m used SiS$_2$ as a Si precursor instead of zinc sulfide as a zinc precursor, and the grinding resultant was dried at 150°C for 12 hours.

CuGe represents (Li$_{5.72}$Cu$_{0.03}$)(P$_{0.99}$Ge$_{0.01}$)S$_{4.75}$Cl$_{1.25}$, and a solid electrolyte was prepared in a similar manner as in Preparation Example 5, except that CuGe having an average particle diameter (D50) of 1.8 $\mu$m, and CuGe having an average particle diameter (D50) of 3.9 $\mu$m used GeS$_2$ as a Ge precursor instead of zinc sulfide as a zinc precursor, and the grinding resultant was dried at 150°C for 12 hours.

CuSn represents (Li$_{5.72}$Cu$_{0.03}$)(P$_{0.99}$Sn$_{0.01}$)S$_{4.75}$Cl$_{1.25}$, and a solid electrolyte was prepared in a similar manner as in Preparation Example 5, except that CuSn having an average particle diameter (D50) of 2.2 $\mu$m, and CuSn having an average particle diameter (D50) of 3.8 $\mu$m used SnS$_2$ as a Sn precursor instead of zinc sulfide as a zinc precursor, and the grinding resultant was dried at 80 °C for 24 hours.

Table 5 shows values of conductivity retention rates calculated by measuring ionic conductivity after leaving positive electrodes with the solid electrolytes applied in each substitution composition in a dry room for 3 days and comparing the same with the initial ionic conductivity. Referring to this, it was found that solid electrolytes of Cu, CuZn, CuSn, CuSi, CuGe, and CuSO$_4$ had higher ionic conductivity retention rates compared to LPSCI, and thus, atmospheric stability was improved.

The results in Table 6 are for experiments conducted at a dry room dew point temperature of -60 to -70°C, and the results in Table 7 are for experiments conducted at a dry room dew point temperature of -45 to -55°C.

Table 6

| Class | Comparative Example 1 A (0.8 $\mu$m) | Example 2 A/ CuZn | Comparative Example 1 air 3 days | Example 2 air 3 days |
|---|---|---|---|---|
| 0.1 C (mAh/g) | 206 | 210 | 205 | 209 |
| 0.33 C (mAh/g) | 192 | 195 | 190 | 195 |

(continued)

| Class | Comparative Example 1 A (0.8 μm) | Example 2 A/ CuZn | Comparative Example 1 air 3 days | Example 2 air 3 days |
|---|---|---|---|---|
| 1.0 C (mAh/g) | 176 | 181 | 173 (reduced by 1.7%) | 179 (reduced by 1.1 %) |

The results of Table 7 below are for those performed when the dew point temperature of the dry room was -45°C to -55°C.

Table 7

| Class | Example 5 A(0.8 μm)/ A(2.0 μm) (7:3) | Example 2 A/ CuZn | Example 5 air 3 days | Example 2 air 3 days |
|---|---|---|---|---|
| 0.1 C (mAh/g) | 209 | 210 | 205 | 208 |
| 0.33 C (mAh/g) | 196 | 195 | 188 | 192 |
| 1.0 C (mAh/g) | 181 | 181 | 130 (reduced by 28 %) | 152 (reduced by 16 %) |

Referring to Table 6, the positive electrodes according to Examples 2 and 5 using a bimodal solid electrolyte were confirmed to have smaller reduction in reversible capacity, after storage in the dry room, compared to the positive electrode of Comparative Example 1 using a single solid electrolyte.

Evaluation Example 7: Particle size distribution

A particle size distribution Span1 of the first solid electrolyte prepared according to Preparation Examples 3 and 8 and a particle size distribution Span2 of the second solid electrolyte prepared according to Preparation Examples 4 to 7 and 9 are shown in Tables 8 and 9, respectively. In Table 8 below, the particle size distribution Span1 is ($d_190$-$d_110/_1150$), and in Table 9, the particle size distribution Span2 is ($d_290$-$d_210/d_250$).

Table 8

| Class | Span1 ($d_190$-$d_110/d_150$) |
|---|---|
| Preparation Example 3 | 1.7 |
| Preparation Example 8 | 1.8 |

Table 9

| Class | Span2 ($d_290d_210/d_250$) |
|---|---|
| Preparation Example 4 | 2.0 |
| Preparation Example 5 | 3.1 |
| Preparation Example 6 | 3.1 |
| Preparation Example 3 | 2.9 |
| Preparation Example 9 | 3.2 |

As shown in Table 8, the particle size distribution Span1 of the first solid electrolytes prepared according to Preparation Examples 3 and 8 was less than 2. And the particle size distribution Span2 of the second solid electrolytes prepared according to Preparation Examples 4 to 7 and 9 showed a value of less than 3.5, as shown in Table 9.

According to an aspect, provided is a positive electrode for an all-solid secondary battery, with improved electrode density and reduced grain boundary resistance. By using this positive electrode, an all-solid-secondary battery with increased reversible capacity and improved charge/discharge characteristics may be prepared.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments. While one or more exemplary embodiments have been described with reference to the figures, it will be understood by those of ordinary skill in the art that various changes in form and details may be made therein without departing from the scope as defined by the following claims.

**Claims**

1. A positive electrode for an all-solid secondary battery, comprising:

   a first positive active material, a second positive active material, a first solid electrolyte, and a second solid electrolyte,
   wherein the first positive active material has a D50 particle diameter that is greater than a D50 particle diameter of the second positive active material,
   wherein the first solid electrolyte has a first D50 particle diameter of 0.5 micrometers to 1.9 micrometers, wherein the first solid electrolyte has a particle size distribution that satisfies Equation 1,
   wherein the second solid electrolyte has a second D50 particle diameter of 2 micrometers to 5 micrometers,
   wherein a ratio of the first D50 particle diameter to the second D50 particle diameter satisfies Equation 2, and
   wherein an amount of the first solid electrolyte in the positive electrode is greater than an amount of the second solid electrolyte in the positive electrode, by weight:

$$\text{Equation 1}$$

$$(d_1 90 - d_1 10) / d_1 50 < 2$$

$$\text{Equation 2}$$

$$0.1 \leq (d_1 50 / d_2 50) \leq 0.95$$

   wherein, in Equations 1 and 2,

   $d_1 10$ is a D10 particle diameter of the first solid electrolyte,
   $d_1 50$ is the first D50 particle diameter of the first solid electrolyte,
   $d_2 50$ is the second D50 particle diameter of the second solid electrolyte, and
   $d_1 90$ is a D90 particle diameter of the first solid electrolyte.

2. The positive electrode of claim 1, wherein the second solid electrolyte has a particle size distribution that satisfies Equation 3:

$$\text{Equation 3}$$

$$(d_2 90 - d_2 10) / d_2 50 < 3.5$$

   wherein, in Equation 3,

   $d_2 10$ is a D10 particle diameter of the second solid electrolyte, and
   $d_2 90$ is a D90 particle diameter of the second solid electrolyte.

3. The positive electrode of claims 1 or 2, wherein a ratio of the amount of the second solid electrolyte in the positive electrode to the amount of the first solid electrolyte in the positive electrode satisfies Equation 4:

## Equation 4

$$0.1 < (y\,/\,x) < 1$$

wherein, in Equation 4,

x is the amount of the first solid electrolyte in the positive electrode, by weight,
y is the amount of the second solid electrolyte in the positive electrode, by weight, and
x and y are both numbers greater than 0.

4. The positive electrode of any of claims 1-3, wherein a ratio of the amount of the second solid electrolyte in the positive electrode to the amount of the first solid electrolyte in the positive electrode satisfies Equation 5:

## Equation 5

$$0.25 \le (y\,/\,x) \le 0.66$$

wherein, in Equation 5,

x is the amount of the first solid electrolyte in the positive electrode, by weight,
y is the amount of the second solid electrolyte in the positive electrode, by weight, and
x and y are both numbers greater than 0.

5. The positive electrode of any of claims 1-4, wherein the first solid electrolyte and the second solid electrolyte each comprise a plurality of monolith particles.

6. The positive electrode of any of claims 1-5, wherein

a ratio of a D50 particle diameter of the second positive active material to a D50 particle diameter of the first solid electrolyte satisfies Equation 6, and
a ratio of a D50 particle diameter of the first positive active material to the D50 particle diameter of the second solid electrolyte satisfies Equation 7:

## Equation 6

$$3 \le \lambda 1 \le 30$$

## Equation 7

$$3 \le \lambda 2 \le 30$$

wherein, in Equations 6 and 7,
$\lambda 1$ is the ratio of the D50 particle diameter of the second positive active material to the D50 particle diameter of the first solid electrolyte, and
$\lambda 2$ is the ratio of a D50 particle diameter of the first positive active material to the D50 particle diameter of the second solid electrolyte.

7. The positive electrode of any of claims 1-6, wherein a total amount of the first solid electrolyte and the second solid electrolyte combined is 2 parts by weight to 70 parts by weight, with respect to 100 parts by weight of a total weight of the first positive active material and the second positive active material combined; and/or
wherein a D50 particle size of the first positive active material is 14 micrometers or greater, and a D50 particle size of the second positive active material is 6 micrometers or less.

8. The positive electrode of any of claims 1-7, wherein

a D50 particle size of the first positive active material is 14 micrometers to 20 micrometers, and
a D50 particle size of the second positive active material is 3 micrometers to 5.5 micrometers.

9. The positive electrode of any of claims 1-8, wherein each of the first solid electrolyte and the second solid electrolyte is independently a compound having an argyrodite crystal structure that is represented by Formula 1:

$$\text{Formula 1} \qquad Li_aM1_xPS_yM2_zM3_w,$$

wherein in Formula 1,

M1 is one or more metal element or metalloid element of Group 1 to Group 15 of the Periodic Table of Elements, provided that M1 is not Li,
M2 is one or more element of Group 17 of the Periodic Table of the Elements,
M3 is $S_mO_n$,
$4 \leq a \leq 8$, $0 \leq x < 1$, $3 \leq y \leq 7$, $0 < z \leq 2$, $0 \leq w < 2$, $1 \leq m \leq 4$, and $1.5 \leq n \leq 5$;
preferably wherein
M1 comprises Na, K, Cu Mg, Ag, Hf, In, Ti, Pb, Sb, Fe, Zr, Zn, Cr, B, Sn, Ge, Si, Zr, Ta, Nb, V, Ga, Al, As, or a combination thereof,
M2 comprises F, Cl, Br, I, or a combination thereof,
M3 comprises $S_4O_6$, $S_3O_6$, $S_2O_3$, $S_2O_4$, $S_2O_5$, $S_2O_6$, $S_2O_7$, $S_2O_8$, $SO_4$, SOs, or a combination thereof.

10. The positive electrode of any of claims 1-9, wherein the first solid electrolyte comprises a compound represented by Formula 12, a compound represented by Formula 12-1, or a compound represented by Formula 13:

$$\text{Formula 12} \qquad Li_{7-x}PS_{6-x}Cl_x,$$

$$\text{Formula 13} \qquad Li_{7-v-z}Cu_vPS_{6-z-w}Cl_z(SO_4)_w,$$

wherein in Formulae 12 and 13,

$0 < x \leq 2$,
$0 < v < 0.7$,
$0 < z \leq 2$, and
$0 < w < 0.2$,

$$\text{Formula 12-1} \qquad Li_aPS_b(Cl)_d$$

wherein in Formula 12-1, $5 \leq a < 7$, $4 \leq b \leq 6$, and $0 < d \leq 2$.

11. The positive electrode of any of claims 1-10, wherein the second solid electrolyte comprises a compound represented by Formula 12, a compound represented by Formula 12-1, or a compound represented by Formula 14:

$$\text{Formula 12} \qquad Li_{7-x}PS_{6-x}Cl_x,$$

wherein, in Formula 12, $0 < x \leq 2$,

$$\text{Formula 14} \qquad Li_{7-v-z}Cu_vPS_{6-z}Cl_z,$$

wherein, in Formulae 12 and 14,

$0 < v < 0.7$, AND
$0 < z \leq 2$,

$$\text{Formula 12-1} \qquad Li_aPS_b(Cl)_d$$

wherein in Formula 12-1, $5 \leq a < 7$, $4 \leq b \leq 6$, and $0 < d \leq 2$.

12. The positive electrode of any of claims 1-11, wherein

the positive electrode further comprises a binder, and
the binder comprises at least one of a styrene-butadiene-styrene copolymer, a (meth)acrylic resin, a styrene-butadiene rubber, a poly(tetrafluoroethylene), a poly(vinylidene fluoride), a polyethylene, a vinylidene fluoride/hexafluoropropylene copolymer, a poly(acrylonitrile), or a poly(methyl (meth)acrylate).

13. An all-solid secondary battery, comprising:

the positive electrode of any of claims 1-12;
a negative electrode; and
a solid electrolyte arranged between the positive electrode and the negative electrode;
preferably wherein
the negative electrode comprises a negative current collector and a first negative active material layer arranged on the negative current collector, and
the first negative active material layer comprises:

a carbon-containing negative active material; or
a carbon-containing negative active material and a first negative active material comprising at least one of a metal or a metalloid;
preferably wherein
the carbon-containing negative active material comprises amorphous carbon, and
the first negative active material comprises indium, silicon, gallium, tin, aluminum, titanium, zirconium, niobium, germanium, antimony, bismuth, gold, platinum, palladium, magnesium, silver, zinc, nickel, iron, cobalt, chromium, cesium, sodium, potassium, calcium, yttrium, tantalum, hafnium, barium, vanadium, strontium, lanthanum, or a combination thereof.

14. The all-solid secondary battery of claim 13, wherein the solid electrolyte comprises an oxide-containing solid electrolyte, a sulfide-containing solid electrolyte, a polymer electrolyte, or a combination thereof.

15. A method of preparing the all-solid secondary battery of claims 13 or 14, the method comprising:

providing a positive electrode comprising a first positive active material, a second positive active material, a first solid electrolyte, and a second solid electrolyte;
providing a negative electrode;
preparing a solid electrolyte; and
arranging the positive electrode, the solid electrolyte, and the negative electrode to prepare the all-solid secondary battery;
preferably wherein the providing of the positive electrode comprises:

obtaining a first mixture by mixing together the first positive active material, the second positive active material, and the first solid electrolyte;
obtaining a second mixture by mixing together the first positive active material, the second positive active material, and the second solid electrolyte;
mixing the second mixture with the first mixture, and adding and mixing a conductive agent, a binder, and a solvent thereto.

# FIG. 1

○ 101    ◯ 102    ◌ 103    ◍ 104

# FIG. 2

# FIG. 3

# FIG. 4

# FIG. 5

100

Europäisches
Patentamt

European
Patent Office

Office européen
des brevets

# EUROPEAN SEARCH REPORT

Application Number

EP 23 21 2551

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/123369 A1 (CHOI BOKKYU [KR] ET AL) 21 April 2022 (2022-04-21) | 1,2,5-15 | INV. H01M4/133 |
| A | * claims 1, 7, 9-11 *<br>* figure 1 *<br>* paragraphs [0056], [0058], [0099], [0100] *<br>----- | 3,4 | H01M4/134<br>H01M4/36<br>H01M4/587<br>H01M4/62<br>H01M10/0562<br>H01M10/0565 |
| X | US 2020/251714 A1 (RYU JI-HOON [KR] ET AL) 6 August 2020 (2020-08-06) | 1,2,6-8,13 | |
| A | * claims 1, 5, 7 *<br>----- | 3-5,9-12,14,15 | ADD.<br>H01M4/02 |

TECHNICAL FIELDS
SEARCHED     (IPC)

H01M

The present search report has been drawn up for all claims

| Place of search | Date of completion of the search | Examiner |
|---|---|---|
| Munich | 2 May 2024 | Gregori, Giuliano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 386 892 A1**

## ANNEX TO THE EUROPEAN SEARCH REPORT
## ON EUROPEAN PATENT APPLICATION NO.

EP 23 21 2551

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2024

| Patent document cited in search report | | Publication date | Patent family member(s) | | Publication date |
|---|---|---|---|---|---|
| US 2022123369 | A1 | 21-04-2022 | EP | 3989322 A1 | 27-04-2022 |
| | | | JP | 2022067647 A | 06-05-2022 |
| | | | JP | 2024045773 A | 02-04-2024 |
| | | | KR | 20220052032 A | 27-04-2022 |
| | | | US | 2022123369 A1 | 21-04-2022 |
| US 2020251714 | A1 | 06-08-2020 | CN | 111108633 A | 05-05-2020 |
| | | | EP | 3690992 A1 | 05-08-2020 |
| | | | JP | 7071497 B2 | 19-05-2022 |
| | | | JP | 2020537320 A | 17-12-2020 |
| | | | KR | 20190124518 A | 05-11-2019 |
| | | | US | 2020251714 A1 | 06-08-2020 |
| | | | WO | 2019208958 A1 | 31-10-2019 |

EPO FORM P0459

For more details about this annex : see Official Journal of the European Patent Office, No. 12/82